(19) Europäisches Patentamt
European Patent Office
Office européen des brevets

(11) EP 2 899 432 B1

(12) **EUROPEAN PATENT SPECIFICATION**

(45) Date of publication and mention of the grant of the patent:
**29.03.2017 Bulletin 2017/13**

(51) Int Cl.:
***F16H 61/42*** *(2010.01)* ***F03D 9/00*** *(2016.01)*

(21) Application number: **14172287.6**

(22) Date of filing: **13.06.2014**

(54) **Hydraulic transmission, power generating apparatus of renewable energy type, and operation method thereof**

Hydraulikgetriebe, Vorrichtung zur Stromerzeugung aus erneuerbarer Energie und Betriebsverfahren dafür

Transmission hydraulique, appareil de génération d'énergie de type renouvelable et procédé de fonctionnement associé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.01.2014 JP 2014011282**

(43) Date of publication of application:
**29.07.2015 Bulletin 2015/31**

(73) Proprietor: **MITSUBISHI HEAVY INDUSTRIES, LTD.**
**Tokyo 108-8215 (JP)**

(72) Inventors:
- **Iwasaki, Satoshi**
  **TOKYO, 108-8215 (JP)**
- **Koyanagi, Takuya**
  **TOKYO, 108-8215 (JP)**
- **Ichinose, Hidekazu**
  **TOKYO, 108-8215 (JP)**
- **Egashira, Yusaku**
  **TOKYO, 108-8215 (JP)**
- **Dumnov, Daniil**
  **LOANHEAD MIDLOTHIAN LOTHIAN, EH20 9TB (GB)**
- **Caldwell, Niall**
  **LOANHEAD MIDLOTHIAN LOTHIAN, EH20 9TB (GB)**

(74) Representative: **Intès, Didier Gérard André et al**
**Cabinet Beau de Loménie**
**158 rue de l'Université**
**75340 Paris Cedex 07 (FR)**

(56) References cited:
**WO-A1-2012/073390**
**WO-A1-2013/080397**
**WO-A2-2011/147996**
**WO-A2-2011/147997**
**WO-A2-2012/100783**
**US-A1- 2012 104 752**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 899 432 B1

## Description

### TECHNICAL FIELD

This disclosure relates to a hydraulic transmission including a combination of a hydraulic pump and a hydraulic motor, a power generating apparatus of a renewable energy type including the transmission, and an operation method thereof.

### BACKGROUND ART

Conventionally, there is known a hydraulic transmission including a hydraulic pump and a hydraulic motor. In the common hydraulic transmission, mechanical rotation energy of the rotation shaft (input shaft) is converted to fluid energy of the pressurized oil in the hydraulic pump, and the fluid energy of the pressurized oil is converted to mechanical rotation energy of the rotation shaft (output shaft) in the hydraulic motor.

For instance, WO2012/073504A describes a wind turbine generator that uses a hydraulic transmission including a hydraulic pump configured to be driven by rotation of the rotor, a hydraulic motor connected to the generator, and pressure oil lines provided between the hydraulic pump and the hydraulic motor (a high pressure oil line and a low pressure oil line). In this hydraulic transmission, the displacement of the hydraulic pump is controlled so as to obtain the target torque which is determined corresponding to the rotation speed of the rotor, and the displacement of the hydraulic motor is controlled as well so as to bring the pressure of the pressurized oil in the high pressure oil line between the hydraulic pump and the hydraulic motor closer to the target value.

WO2011147997 (A2), which is considered as the closest prior art, discloses an energy extraction device and method for extracting energy from a fluctuating energy flow from a renewable energy source.

### SUMMARY

[Technical Problem]

However, in the hydraulic transmission described in WO2012/073504A, when the hydraulic motor is receiving high load and pressure increase in the pressurized oil in the high pressure oil line is caused by rapid increase of energy inputted into the rotation shaft (for instance, by the gust in the case of a wind turbine generator), there is a possibility that the pressure of the pressurized oil in the high pressure oil line becomes excessively high because it is difficult to adjust the pressure with the hydraulic motor. In this case, for instance, for a hydraulic transmission used in a wind turbine generator, the energy inputted into the hydraulic transmission can be reduced by pitch control. However, as the pitch control is time-consuming, the high pressure state continues for a period of time.

As the pressure increase of the pressurized oil in the high pressure oil line can raise problems in the strength of the hydraulic transmission such as damage and leakage of the pressurized oil, it is necessary to take some measure to prevent the pressure increase of the pressurized oil in the high pressure oil line.

In this regard, an object of at least one embodiment of the present invention is to provide a hydraulic transmission, a power generating apparatus of a renewable energy type, and an operation method thereof which are capable of preventing the pressure increase of the pressurized oil in the high pressure oil line from being caused by rapid increase of the energy inputted into the rotation shaft while the hydraulic motor receives high load.

### SOLUTION TO PROBLEM

The invention relates to a hydraulic transmission according to claim 1 and an operation method for a hydraulic transmission according to claim 12.

A hydraulic transmission according to at least one embodiment of the present disclosure comprises:

a hydraulic pump of a variable displacement type configured to be driven by a mechanical energy inputted into a rotation shaft;
a hydraulic motor of a variable displacement type configured to be driven by a pressurized oil from the hydraulic pump;
a high pressure oil line for introducing the pressurized oil from the hydraulic pump to the hydraulic motor; and
a controller for controlling a displacement of each of the hydraulic pump and the hydraulic motor,
wherein, the controller is configured to:

when at least one of the displacement of the hydraulic motor or a pressure of the pressurized oil is less than a first threshold value, control the displacement of the hydraulic motor so as to adjust the pressure of the pressurized oil in the high pressure oil line to a target pressure value, and
when at least one of the displacement of the hydraulic motor or the pressure of the pressurized oil is not less than the first threshold value, reduce the displacement of the hydraulic pump so as to prevent the pressure of the pressurized oil from increasing suddenly responsive to a rapid increase of the mechanical energy inputted into the rotation shaft.

When at least one of the displacement of the hydraulic motor or the pressure of the pressurized oil is less than the first threshold value, there is enough room for increasing the displacement of the hydraulic motor, or it is allowable to increase the pressure of the pressurized oil in the high pressure oil line to some extent. Thus, for the hydraulic transmission, in such case, the displacement of the hydraulic motor is controlled to adjust the pressure of the pressurized oil in the high pressure oil line so as to adjust the pressure of the pressurized oil in the high pressure oil line to the target value. As a result, the pressure of the pressurized oil in the high pressure oil line is appropriately controlled by controlling the displacement of the hydraulic motor.
On the other hand, when at least one of the displacement of the hydraulic motor or the pressure of the pressurized oil has become not less than the first threshold value, there is no enough room for increasing the displacement of the hydraulic motor, or it is almost unallowable to increase the pressure of the pressurized oil in the high pressure oil line. Thus, for the above hydraulic transmission in such case, the pressure of the pressurized oil in the high pressure oil line responsive to the rapid increase of the mechanical energy inputted into the rotation shaft is reduced by decreasing the displacement of the hydraulic pump, in order to prevent sudden increase of the pressure. That is, when at least one of the displacement of the hydraulic motor or the pressure of the pressurized oil is not less than the first threshold value (for instance, when the hydraulic motor is receiving high load), there may be insufficient effect of reduction of the pressure in the high pressure oil line by controlling the displacement of the hydraulic motor, which may cause the pressure of the pressurized oil in the high pressure oil line to exceed the tolerant value. Herein, the energy inputted into the hydraulic pump is suppressed by reducing the displacement of the hydraulic pump, so as to prevent the sudden increase in the pressure of the pressurized oil in the high pressure oil line. As a result, even when there are fluctuation factors of the energy inputted into the hydraulic pump, it is possible to maintain the pressure of the pressurized oil in the high pressure oil line in the appropriate range.
In some embodiment, the controller is configured to, when the displacement of the hydraulic motor is not less than the first threshold value, control the displacement of the hydraulic pump by switching a device for adjusting the pressure of the pressurized oil to the target value from the hydraulic motor to the hydraulic pump.
When the displacement of the hydraulic motor has become not less than the first threshold value (that is, when the hydraulic motor is receiving high load), the pressure control of the pressurized oil in the high pressure oil line by the control of the displacement of the hydraulic motor is switched to the pressure control of the pressurized oil in the high pressure oil line by the control of the displacement of the hydraulic pump. As a result, even when excessive energy is inputted into the hydraulic pump, it is possible to adjust the pressure of the pressurized oil in the high pressure oil line with high accuracy so as to bring the pressure to the target pressure.
In one embodiment, the controller is configured to, when the displacement of the hydraulic motor is not less than the first threshold value, fix the displacement of the hydraulic motor at a maximum value.
When the displacement of the hydraulic motor has become not less than the first threshold value, the displacement of the hydraulic motor is fixed at the maximum value so that the pressure increase of the pressurized oil in the high pressure oil line is suppressed as much as possible by the hydraulic motor, and also, the displacement of the hydraulic pump is reduced. As a result, it is possible to reliably prevent the pressure increase of the pressurized oil in the high pressure oil line.
In one embodiment, the controller is configured to, when the displacement of the hydraulic motor becomes less than a second threshold value which is smaller than the first threshold value, restart controlling the displacement of the hydraulic motor by switching the device for adjusting the pressure of the pressurized oil to the target value from the hydraulic pump to the hydraulic motor.
As a result, by setting different switching points between switching from the control of the hydraulic motor to the control of the hydraulic pump and switching from the control of the hydraulic pump to the control of the hydraulic motor, it is possible to secure the stability of the control near the switching points.
In one embodiment, the controller is configured to, when the pressure of the pressurized oil is not less than the first threshold value, limit the displacement of the hydraulic pump to be not greater than an upper limit value by performing a limiting process on the displacement of the hydraulic pump which is determined based on a correlation between a rotation speed of the rotation shaft and a torque of the hydraulic pump, and
the upper limit value limited by the limiting process is determined by a correlation in which the upper limit value decreases and finally reaches zero with an increase of the pressure of the pressurized oil in a pressure range where the pressure of the pressurized oil is not less than the first threshold value.

As described above, when the pressure of the pressurized oil is not less than the first threshold value, the limiting process is performed on the displacement of the hydraulic pump which is determined based on the correlation between the rotation speed of the rotation shaft and the torque of the hydraulic pump, thereby limiting the displacement of the hydraulic pump to be not greater than the upper limit value. Herein, the upper limit value for the displacement of the hydraulic pump used in the limiting process is determined by the correlation in which the upper limit value decreases and finally reaches zero with the increase in the pressure of the pressurized oil in the high pressure oil line. Thus, it is possible to set an appropriate upper limit value corresponding to the pressure increase of the pressurized oil in the high pressure oil line. Accordingly, it is possible to prevent the sudden increase of the pressurized oil in the high pressure oil line even when excessive energy is inputted into the hydraulic pump.

In some embodiment, the controller is configured to: determine a control command for the displacement of the hydraulic motor using a gain which varies depending on the pressure of the pressurized oil; and when the pressure of the pressurized oil is not less than the first threshold value, limit the displacement of the hydraulic pump to be not greater than the upper limit value responsive to an increase of the pressure of the pressurized oil, and determine the control command for the displacement of the hydraulic motor using a greater gain than the gain used when the pressure of the hydraulic pump is less than the first threshold value.

When the pressure of the pressurized oil in the high pressure oil line has become not less than the first threshold value, the sensitivity for the pressure deviation of the displacement of the hydraulic motor (the deviation between the target pressure and the pressure of the pressurized oil in the high pressure oil line) is improved by using a larger gain than the gain used when the pressure of the pressurized oil in the high pressure oil line is less than the first threshold value. As a result, it is possible to cause the pressure of the pressurized oil in the high pressure oil line to quickly return to less than the first threshold value.

In some embodiment, the controller is configured to, when the displacement of the hydraulic motor is less than the first threshold value, control the displacement of the hydraulic pump so as to adjust the torque of the hydraulic pump to a torque pressure value in accordance with a correlation between the rotation speed of the rotation shaft and the torque of the hydraulic pump.

As a result, it is possible to adjust the torque of the hydraulic pump to the target value which corresponds to the rotation speed of the hydraulic pump, in accordance with the correlation between the rotation speed of the rotation shaft and the torque of the hydraulic pump.

In one embodiment, the first threshold value is not less than 80% and not greater than 100% of a maximum displacement of the hydraulic motor.

In another embodiment, the first threshold value is not less than 100% and not greater than 120% of a rated pressure of the pressurized oil.

In some embodiment, a difference between the first threshold value and the second threshold value is not less than 2% and not greater than 40% of the maximum displacement of the hydraulic motor.

A power generating apparatus of a renewable energy type according to at least one embodiment of the present disclosure comprises:

at least one blade;
a rotation shaft configured to be rotated by a renewable energy received by the at least one blade;
a hydraulic pump of a variable displacement type configured to be driven by a mechanical energy of the rotation shaft;
a hydraulic motor of a variable displacement type configured to be driven by a pressurized oil from the hydraulic pump;
a high pressure oil line for introducing the pressurized oil from the hydraulic pump to the hydraulic motor;
a controller for controlling a displacement of each of the hydraulic pump and the hydraulic motor; and
a generator configured to be driven by the hydraulic motor,
wherein, the controller is configured to:

when at least one of the displacement of the hydraulic motor or a pressure of the pressurized oil is less than a first threshold value, control the displacement of the hydraulic motor so as to set the pressure of the pressurized oil in the high pressure oil line at a target value, and
when at least one of the displacement of the hydraulic motor or the pressure of the pressurized oil is not less than the first threshold value, reduce the displacement of the hydraulic pump so as to prevent the pressure of the high pressure from increasing suddenly associated with rapid increase of the mechanical energy inputted into the rotation shaft.

In the above power generating apparatus of renewable energy type, when at least one of the displacement of the hydraulic motor or the pressure of the pressurized oil is less than the first threshold value, the displacement of the hydraulic motor is controlled to adjust the pressure of the pressurized oil in the high pressure oil line in order to adjust the pressure of the pressurized oil in the high pressure oil line to the target value. As a result, it is possible to control the pressure of the pressurized oil in the high pressure oil line appropriately by controlling the displacement of the hydraulic motor.

On the other hand, when at least one of the displacement of the hydraulic motor or the pressure of the pressurized oil has become not less than the first threshold value, the energy inputted into the hydraulic pump is suppressed by reducing the displacement of the hydraulic pump, so as to prevent the sudden increase in the pressure of the pressurized oil in the high pressure oil line. As a result, it is possible to maintain the pressure of the pressurized oil in the high pressure oil line in the appropriate range even when there are fluctuation factors of the energy inputted into the hydraulic pump,.

In one embodiment, the controller is configured to, when the displacement of the hydraulic motor is not less than the first threshold value, fix the displacement of the hydraulic motor at a maximum value.

When the displacement of the hydraulic motor has become not less than the first threshold value, the displacement of the hydraulic motor is fixed at the maximum value so that the pressure increase of the pressurized oil in the high pressure oil line is suppressed as much as possible, and also the displacement of the hydraulic pump is reduced. As a result, it is possible to reliably prevent the pressure increase in the pressurized oil in the high pressure oil line.

In one embodiment, the power generating apparatus of a renewable energy type is a wind turbine generator which generates electrical power in the generator, utilizing wind energy received by the at least one blade as a renewable energy.

An operation method for a hydraulic transmission according to one embodiment of the present disclosure is for the hydraulic transmission which includes: a hydraulic pump of a variable displacement type configured to be driven by a mechanical energy inputted into a rotation shaft; a hydraulic motor of a variable displacement type configured to be driven by a pressurized oil from the hydraulic pump; and a high pressure oil line for introducing the pressurized oil from the hydraulic pump to the hydraulic motor,

wherein, when at least one of a displacement of the hydraulic motor and a pressure of the pressurized oil is less than a first threshold value, the displacement of the hydraulic motor is controlled so as to adjust the pressure of the pressurized oil in the high pressure oil line to a target value, and

wherein, when at least one of the displacement of the hydraulic motor and the pressure of the pressurized oil is not less than the first threshold value, the displacement of the hydraulic pump is reduced so as to prevent the pressure of the pressurized oil from increasing suddenly associated with rapid increase of the mechanical energy inputted into the rotation shaft.

According to the operation method for a hydraulic transmission, when at least one of the displacement of the hydraulic motor or the pressure of the pressurized oil is less than the first threshold value, it is possible to control the pressure of the pressurized oil in the high pressure oil line appropriately by controlling the displacement of the hydraulic motor.

On the other hand, when at least one of the displacement of the hydraulic motor or the pressure of the pressurized oil has become less than the first threshold value, the energy inputted into the hydraulic pump is suppressed by reducing the displacement of the hydraulic pump, so as to prevent the sudden increase in the pressure of the pressurized oil in the high pressure oil line. As a result, it is possible to maintain the pressure of the pressurized oil in the high pressure oil line in the appropriate range even when there are fluctuation factors of the energy inputted into the hydraulic pump.

An operation method for a power generating apparatus of a renewable energy type according to at least one embodiment of the present disclosure is for a power generating apparatus of a renewable energy type which includes: at least one blade; a rotation shaft configured to be rotated by a renewable energy received by the at least one blade; a hydraulic pump of a variable displacement type configured to be driven by the rotation shaft; a hydraulic motor of a variable displacement type configured to be driven by a pressurized oil from the hydraulic pump; a high pressure oil line for introducing the pressurized oil from the hydraulic pump to the hydraulic motor; and a generator configured to be driven by the hydraulic motor,

wherein, when at least one of a displacement of the hydraulic motor and a pressure of the pressurized oil is less than a first threshold value, the displacement of the hydraulic motor is controlled so as to adjust the pressure of the pressurized oil in the high pressure oil line to a target value, and

wherein, when at least one of the displacement of the hydraulic motor and the pressure of the pressurized oil is not less than the first threshold value, the displacement of the hydraulic pump is decreased so as to prevent the pressure of the pressurized oil from increasing suddenly associated with rapid increase of the mechanical energy inputted into the rotation shaft.

According to the operation method for a power generating apparatus of a renewable energy type, when at least one of the displacement of the hydraulic motor or the pressure of the pressurized oil is less than the first threshold value, it is possible to control the pressure of the pressurized oil in the high pressure oil line appropriately by controlling the displacement of the hydraulic motor.

On the other hand, when at least one of the displacement of the hydraulic motor or the pressure of the pressurized oil has become less than the first threshold value, the energy inputted into the hydraulic pump is suppressed by reducing the displacement of the hydraulic pump, so as to prevent the sudden increase in the pressure of the pressurized oil in the high pressure oil line. As a result, it is possible to maintain the pressure of the pressurized oil in the high pressure oil line in the appropriate range even when there are fluctuation factors of the energy inputted into the hydraulic pump.

ADVANTAGEOUS EFFECTS

According to at least one embodiment of the present invention, it is possible to prevent the pressure increase of the pressurized oil in the high pressure oil line caused by the rapid increase of the energy inputted into the rotation shaft while the hydraulic motor is receiving high load. Also, it is possible to maintain the pressure of the pressurized oil in the high pressure oil line in the appropriate range even when there are fluctuation factors of the energy inputted into the hydraulic pump.

BRIEF DESCRIPTION OF DRAWINGS

Fig. 1 is an illustration of the overall configuration of a wind turbine generator which includes the hydraulic transmission according to one embodiment.
Fig. 2 is an exemplary illustration of a specific configuration of the hydraulic pump.
Fig. 3 is an exemplary illustration of a specific configuration of the hydraulic motor.
Fig. 4 is an explanatory illustration of the control of each part in the controller according to the first embodiment.
Fig. 5 is a signal flow chart of determination of the displacement ratio of the hydraulic motor in the motor control part according to the first embodiment.
Fig. 6 is a signal flow chart of determination of the displacement ratio of the hydraulic pump in the pump control part according to the first embodiment.
Fig. 7 is a graph of the optimal curve in the coordinate system where x-axis is the rotation speed $\omega_R$ and y-axis is the torque $\tau$ of the hydraulic pump.
Fig. 8 is an illustration of an example of the temporal change in the various parameters of the wind turbine generator according to the comparative example.
Fig. 9 is an illustration of an example of the temporal change in the various parameters of the wind turbine generator according to the first embodiment.
Fig. 10 is a signal flow chart of determination of the displacement ratio of the hydraulic pump in the pump control part according to the second embodiment.
Fig. 11 is a signal flow chart of determination of the displacement ratio of the hydraulic motor at the motor control part according to the second embodiment.
Fig. 12 is an illustration of the upper limit value for the pump displacement ratio used in the limiting process.
Fig. 13 is an illustration of a specific example of the correlation of the variable gain.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.
A wind turbine generator, being a power generating apparatus of a renewable energy type, will be described in the following embodiments as an example of the use of the hydraulic transmission. However, the present invention can be applied to another power generating apparatus of a renewable energy type such as a tidal current generator, an ocean current generator, and a river current generator.

(Device Configuration of the Wind Turbine Generator)

Fig. 1 is an illustration of the overall configuration of a wind turbine generator which includes the hydraulic transmission according to one embodiment.
As shown in Fig. 1, the wind turbine generator 1 includes a rotor 4 which has a blade 1 and a hub 3, a rotation shaft 5 which rotates with the rotor 4, a hydraulic transmission 6 which increases the rotation speed of the rotor 4, and a generator 8 to which the rotation energy of the rotor 4 is inputted via the hydraulic transmission 6.
The rotor 4 includes at least one blade 2 attached to the hub 3, where the blade 2 is configured to rotate with the hub 3 by receiving wind. The rotation shaft 5 is coupled to the hub 3. The entire rotor 4 is rotated by the wind energy received by the blade 2 and the rotation is inputted into the hydraulic transmission 6 via the rotation shaft 5. Herein, an actuator (not shown) is attached to the blade 2, which is operated under control of the pitch control part 51 to change the pitch angle of the blade 2.

The hydraulic transmission 6 includes a hydraulic pump 10 of a variable displacement type which is configured to be driven by the mechanical rotation energy inputted to the rotation shaft 5, a hydraulic motor 20 of a variable displacement type connected to the generator 8, and a high pressure oil line 30 and a low pressure oil line 31 provided between the hydraulic pump 10 and the hydraulic motor 20. The generator 8 is connected to the utility grid 9 and coupled to the output shaft 7 of the hydraulic motor 20. The rotation is inputted into the hydraulic pump 10 of the hydraulic transmission 6, the rotation speed is increased in the hydraulic transmission 6, and then the rotation is inputted into the generator 8.

The discharge side of the hydraulic pump 10 is connected to the intake side of the hydraulic motor 20 via the high pressure oil line 30, while the intake side of the hydraulic pump 10 is connected to the discharge side of the hydraulic motor 20 via the low pressure oil line 31. The pressurized oil discharged from the hydraulic pump 10 (high-pressure oil) flows into the hydraulic motor 20 via the high pressure oil line 30 and drives the hydraulic motor 20. The pressurized oil having performed work in the hydraulic motor 20 (low-pressure oil) flows into the hydraulic pump 10 via the low pressure oil line 31, and then, after being pressurized in the hydraulic motor 10, flows into the hydraulic motor 20 again via the high pressure oil line 30.

While the hydraulic transmission 6 shown in Fig. 1 includes only one hydraulic motor 20, a plurality of hydraulic motors 20 may be provided, each of the hydraulic motors 20 being connected to the hydraulic pump 10.

Hereinafter, an example of a specific configuration of the hydraulic pump 10 and the hydraulic motor 20 will be described. Fig. 2 is an exemplary illustration of a specific configuration of the hydraulic pump. Fig. 3 is an exemplary illustration of a specific configuration of the hydraulic motor.

The hydraulic pump 10 shown in Fig. 2 includes a plurality of working chambers 13 formed of cylinders 11 and pistons 12, a cam 14 having a cam curved face which engages with the pistons 12, and a high pressure valve 15 and a low pressure valve 16 provided for each of the working chamber 13.

The high pressure valve 15 is provided for the high pressure communication path 17 between the respective working chamber 13 and the high pressure oil line 30, while the low pressure valve 16 is provided for the low pressure communication path 18 between the respective working chamber 13 and the low pressure oil line 31.

In the hydraulic pump 10, when the cam 14 rotates with the rotation shaft 5, the pistons 32 cyclically move up and down according to the cam curve, repeating: the pump stroke where the pistons 12 move toward the top dead center from the bottom dead center; and the intake stroke where the pistons 12 move toward the bottom dead center from the top dead center. As a result, the volume of the working chamber 13 formed of the piston 12 and the inner walls of the cylinder 11 cyclically changes.

In the hydraulic pump 10, it is possible to switch each working chamber 13 between the active state and the non-active state by controlling opening/closing of the high pressure valve 15 and the low pressure valve 16. When the working chamber 13 is active, the pressurized oil is caused to flow into the working chamber 13 from the low pressure oil line 31 by closing the high pressure valve 15 and opening the low pressure valve 16 in the intake stroke, and the pressurized oil having been pressurized is discharged into the high pressure oil line 30 by opening the high pressure valve 15 and closing the low pressure valve 16 in the pump stroke. On other hand, when the working chamber 13 is non-active, both in the intake stroke and the pump stroke, the pressurized oil is reciprocated between the working chamber 13 and the low pressure oil line 31 by maintaining the state where the high pressure valve 15 is closed and the low pressure valve 16 is opened (That is, the pressurized oil is not discharged into the high pressure oil line 30). As a result, it is possible to adjust the displacement of the hydraulic pump 10 as a whole by varying the ratio of the number of the working chambers 13 in the active state to the total number of the working chambers 13. The adjustment of the displacement of the hydraulic pump 10 as a whole is performed by the pump control part 51 described below.

The hydraulic motor 20 shown in Fig. 3 includes a plurality of working chambers 23 formed of cylinders 21 and pistons 22, a cam 24 having a cam curved face which engages with the pistons 22, and a high pressure valve 25 and a low pressure valve 26 provided for each of the working chamber 13.

The high pressure valve 25 is provided for the high pressure communication path 27 between the respective working chamber 23 and the high pressure oil line 30, while the low pressure valve 26 is provided for the low pressure communication path 28 between the respective working chamber 23 and the low pressure oil line 31.

In the hydraulic motor 20, a pressure difference is created between the high pressure oil line 30 and the low pressure oil line 31 by the hydraulic pump 10, and causes the pistons 22 to cyclically move up and down, repeating: the motor stroke where the pistons 22 move toward the bottom dead point from the top dead point; and the discharge stroke where the pistons 22 move toward the top dead point from the bottom dead point. While the hydraulic motor 20 is operated, the displacement of the working chamber 23 formed of the piston 22 and the inner walls of the cylinder 21 changes cyclically.

In the hydraulic motor 20, it is possible to switch each working chamber 23 between the active state and the non-active state by the opening/closing control of the high pressure valve 25 and the low pressure valve 26. When the working chamber 23 is active, the pressurized oil is caused to flow into the working chamber 23 from the high pressure oil line 30 by opening the high pressure valve 25 and closing the low pressure valve 26 in the motor stroke, and the pressurized oil having performed work in the working chamber 23 is discharged into the low pressure oil line 31 by closing the high pressure valve 25 and opening the low pressure valve 26 in the discharge stroke. On other hand, when the working chamber 23 is non-active, both in the motor stroke and the discharge stroke, the pressurized oil is reciprocated between the working chamber 23 and the low pressure oil line 31 by maintaining the state where the high pressure valve 25 is closed and the low pressure valve 26 is opened (that is, the working chamber 23 does not let in the high pressure oil from the high pressure oil line 30). As a result, it is possible to adjust the displacement of the hydraulic motor 20 as a whole by varying the ratio of the number of the working chambers 23 in the active state to the total number of the working chambers 23, similarly to the hydraulic pump 10. The adjustment of the displacement of the hydraulic motor 20 as a whole is performed by the motor control part 53 described below.

The hydraulic pump 10 and the hydraulic motor 20 are not limited to the piston type described above, and may be of any kind of a hydraulic mechanism of a variable displacement type such as the vane type. Also, for a piston type, a pump/motor of an axial piston type, a radial piston type, a reciprocating-piston type and the like can be used.

Referring back to Fig. 1, an accumulator 32 may be connected to the high pressure oil line 30 for the purpose of preventing pulsation or of accumulating the pressure. For instance, an accumulator 32 for preventing pulsation is capable of absorbing the fluctuations in the pressure of the pressurized oil in the high pressure oil line 30. As a result, it is possible to stabilize the pressure in the high pressure oil line 30 with the accumulator 32. Similarly, an accumulator 33 for preventing pulsation may be connected to the low pressure oil line 31.

Also, between the high pressure oil line 30 and the low pressure oil line 31, a bypass flow path 34 may be provided, which bypasses the hydraulic motor 20. In this case, a relief valve 35 may be provided for the bypass flow path 34, the relief valve 35 maintaining the pressure of the pressurized oil in the high pressure oil line 30 below the set pressure. As a result, when the pressure of the pressurized oil in the high pressure oil line 30 increases and reaches the set pressure of the relief valve 35, it is possible to relieve the pressurized oil in the high pressure oil line 30 to the low pressure oil line 31 via the bypass flow path 34 by automatically opening the relief valve 35. However, as the operation of the wind turbine generator 1 is required to be stopped when activating the relief valve 35, it is preferable to perform the pressure control described below from the perspective of continuously operating the wind turbine generator 1.

Moreover, the hydraulic transmission 6 may include various equipments such as an oil filter for removing impure substances from the pressurized oil, an oil tank for reserving the pressurized oil, and an oil cooler for cooling the pressurized oil.

The wind turbine generator 1 includes various measurement devices. For instance, as a measurement device, provided are a rotation speed meter 41 for measuring the rotor rotation speed which is the rotation speed of the rotation shaft 5 (the rotation speed of the hydraulic pump 10), a pressure gauge 42 for measuring the pressure of the pressurized oil in the high pressure oil line 30, and a rotation speed meter 43 for measuring the rotation speed of the hydraulic motor 20. Although not shown in the drawings, further provided as a measurement device are an anemometer for measuring the wind velocity, an output meter for measuring the output of the generator 8 and the like. The measurement value of the above measurement devices is transmitted to the controlled 50 to be used for controlling the pitch of the blade 2, controlling the pump displacement of the hydraulic pump 10, controlling the motor displacement of the hydraulic motor 20, etc.

Next, the configuration of the controller 50 will be described.

In some embodiment, the controller 50 is configured to control the displacement of each of the hydraulic pump 10 and the hydraulic motor 20. The controller 50 is configured to, when at least one of the displacement of the hydraulic motor 20 or a pressure of the pressurized oil in the high pressure oil line 30 is less than the first threshold value, control the displacement of the hydraulic motor 20 so as to adjust the pressure of the pressurized oil in the high pressure oil line 30 to the target pressure value. On the other hand, when at least one of the displacement of the hydraulic motor 20 or the pressure of the high-pressure oil has become a value not less than the first threshold value, reduce the displacement of the hydraulic pump 10 so as to prevent the pressure of the high-pressure oil from increasing suddenly responsive to a rapid increase of the mechanical energy inputted into the rotation shaft 5.

In one embodiment, the controller 50 includes a pitch control part 51, a pump control part 52, a motor control part 53, and a memory part 54.

The pitch control part 51 calculates a control command for controlling the pitch angle of the blade 2, and then outputs the control command to an actuator for changing the pitch angle of the blade 2.

The pump control part 52 calculates a control command for controlling the displacement of the hydraulic pump 10, and then outputs the control command to the hydraulic pump 10. For instance, for the wind turbine generator 1 including the hydraulic pump 10 shown in Fig. 2, in order to control the displacement of the hydraulic pump 10 as a whole, the ratio of the number of the working chambers 13 in the active state to the total number of the working chambers 13, that is, the displacement ratio, is controlled by controlling the opening and closing of the high pressure valve 15 and the low pressure valve 16. Thus, for the hydraulic pump 10, the displacement of the hydraulic pump 10 as a whole is controlled by calculating the control command which includes the displacement ratio and outputting the control command to the high pressure valve 15 and the low pressure valve 16.

The motor control part 53 calculates a control command for controlling the displacement of the hydraulic motor 20, and then outputs the control command to the hydraulic motor 20. For instance, for the wind turbine generator 1 including the hydraulic motor 20 in Fig. 3, in order to control the displacement of the hydraulic motor 20 as a whole, the ratio of the number of the working chambers 23 in the active state to the total number of the working chambers 23, that is, the displacement ratio, is controlled by controlling the opening and closing of the high pressure valve 25 and the low pressure valve 26. Thus, for the hydraulic motor 20, the displacement of the hydraulic motor 20 as a whole is controlled by calculating the control command which includes the displacement ratio and outputting the control command to the high pressure valve 25 and the low pressure valve 26.

The memory part 54 may store, for instance, the correlation between the rotation speed of the rotor and the torque of the hydraulic pump (see Fig. 7), the correlation of the variable gain (see Fig. 13), and the like.

For the controller 50, in the motor control part 53, when at least one of the displacement of the hydraulic motor 20 or the pressure of the high-pressure oil is less than the first threshold value, there is enough room remained for increasing the displacement of the hydraulic motor 20 or it is allowable to increase the pressure of the high-pressure oil to some extent. Thus, for the controller 50 in such case, the pressure of the high-pressure oil is controlled by controlling the displacement of the hydraulic motor 20, in order to adjust the pressure of the high-pressure oil to the target value. As a result, it is possible to appropriately control the pressure of the high-pressure oil by controlling the displacement of the hydraulic motor 20.

On the other hand, when at least one of the displacement of the hydraulic motor 20 or the pressure of the high-pressure oil has become not less than the first threshold value, there is no enough room for increasing the displacement of the hydraulic motor 20, or it is almost unallowable to increase the pressure of the high-pressure oil. Thus, for the hydraulic transmission in such case, the marked increase of the pressure of the high-pressure oil responsive to the rapid increase of the mechanical energy inputted into the rotation shaft 5 is prevented by reducing the displacement of the hydraulic pump 10, thereby preventing the sudden increase of said pressure. That is, when at least one of the displacement of the hydraulic motor 20 or the pressure of the high-pressure oil is not less than the first threshold value (for instance, when the hydraulic motor 20 receives high load), the effect of reduction of the pressure of the high-pressure oil by controlling the displacement of the hydraulic motor 20 may be insufficient, which may cause the pressure of the high-pressure oil to exceed the tolerant value. Herein, the energy inputted into the hydraulic pump 10 is suppressed by reducing the displacement of the hydraulic pump 10, so as to prevent the sudden increase in the pressure of the high-pressure oil. As a result, it is possible to maintain the pressure of the pressurized oil of the high-pressure oil in the appropriate range even when there are fluctuation factors of the energy inputted into the hydraulic pump 10.

Hereinafter, a specific control by the controller 50 will be described in detail.

In each of the following embodiments, the same control is performed during the normal control mode in which at least one of the displacement of the hydraulic motor 20 or the pressure of the pressurized oil in the high pressure oil line 30 is less than the first threshold value. In contrast, different controls are performed between the first embodiment and the second embodiment during the high-load control mode in which at least one of the displacement of the hydraulic motor 20 or the pressure of the pressurized oil in the high pressure oil line 30 is not less than the first threshold value. That is, during the high-load control mode, the pressure of the high-pressure oil is controlled to decrease by controlling the displacement of the hydraulic pump 10 in the first embodiment, while the pressure of the high-pressure oil is controlled to decrease by performing a filtering process on the hydraulic pump 10 in the second embodiment.

(Control of the Controller according to the First Embodiment)

Fig. 4 is an illustration for explaining the control for each part in the controller according to the first embodiment. Herein, each part of the wind turbine generator 1 is described using the reference signs shown in Fig. 1.

In the above wind turbine generator 1, as shown in Fig. 4, the controller 50 includes a pitch control part 51 for controlling the pitch angle of the blade 1, a pump control part 52 for controlling the displacement ratio of the hydraulic motor 20, and a motor control part 53 for controlling the displacement ratio of the hydraulic motor 20. The following embodiments will be explained using the displacement ratio as the control parameter which indicates the displacement. The "displacement ratio" hereinafter is a ratio of the number of the working chambers in the active state to the total number of the working chambers as in the hydraulic pump 10 shown in Fig. 2 or the hydraulic motor 20 shown in Fig. 3 for instance, which is synonymous with the dimensionless value of the displacement.

The control by the controller 50 after connecting the generator 8 to the utility grid 9 includes the first control mode where the motor displacement ratio $M_{Fd}$ of the hydraulic motor 20 is less than the first threshold value $M_{Fdmax1}$ and the second control mode where the motor displacement ratio $M_{Fd}$ of the hydraulic motor 20 is not less than the first threshold value $M_{Fdmax1}$.

During the first control mode where the motor displacement ratio $M_{Fd}$ is less than the first threshold value

$M_{Fdmax1}$, there is enough room remained for increasing the motor displacement $M_{Fd}$. Thus, the first control mode is operated upon the normal operation, for instance, and the pressure $P_a$ of the high-pressure oil is adjusted by controlling the motor displacement $M_{Fd}$.

Specifically, the pitch control part 51 mainly calculates the control command for fixing the pitch angle $\theta$ so that the blade 2 reaches the fine state, and then outputs the control command to the actuator of the blade 2. The pump control part 52 mainly calculates the control command of the pump displacement ratio $P_{Fd}$ for controlling the rotor rotation speed $\omega_R$ and then outputs the control command to the hydraulic pump 10. The motor control part 53 mainly calculates the control command of the motor displacement $M_{Fd}$ for controlling the pressure $P_a$ of the high-pressure oil and then outputs the control command to the hydraulic motor 20.

On the other hand, during the second control mode where the motor displacement ratio $M_{Fd}$ is not less than the first threshold value $M_{Fdmax1}$, there remains no enough room for increasing the motor displacement ratio $M_{Fd}$. Thus, in the second control mode, the device, which operates during the high-load operation of the hydraulic motor 20 for adjusting the pressure $P_a$ of the high-pressure oil to the target value for instance, is switched from the hydraulic motor 20 to the hydraulic pump 10 so as to reduce the pump displacement ratio $P_{Fd}$. As a result, the pressure $P_a$ of the high-pressure oil responsive to the rapid increase of the mechanical energy inputted into the rotation shaft 5, is reduced, thus preventing the sudden increase in the pressure.

Specifically, the motor control part 53 mainly calculates the control command which causes the motor displacement ratio $M_{Fd}$ to become the maximum displacement ratio $M_{Fdmax1}$, and then outputs the control command to the hydraulic motor 20. The pump control part 52 mainly calculates the control command of the pump displacement ratio $P_{Fd}$ for controlling the pressure $P_a$ of the high-pressure oil and then outputs the control command to the hydraulic pump 10. Herein, the pump control part 52 may also switch from the first control mode to the second control mode when the generator 8 is disconnected from the utility grid 9, which is another condition for switching from the first control mode to the second control mode. The pitch control part 51 mainly calculates the control command of the pitch angle $\theta$ for controlling the rotation speed $\omega_R$, and then outputs the control command to the actuator of the blade 2. At this time, as the torque of the hydraulic pump 10 decreases due to the reduction of the pump displacement ratio $P_{Fd}$, the aerodynamic torque acting on the rotor 4 becomes excessive, causing the rotation speed of the hydraulic pump 10 (the rotor rotation speed $\omega_R$) to increase. Thus, in the second control mode, the pressure $P_a$ of the high-pressure oil is controlled by controlling the pump displacement ratio $P_{Fd}$ with the hydraulic pump 10, and the rotor rotation speed $\omega_R$ is controlled as well by adjusting the aerodynamic torque by controlling the pitch angle $\theta$ with the pitch control part 51. Herein, the pitch control part 51 may be configured to also switch from the first control mode to the second control mode when the generator 8 is disconnected from the utility grid 9, which is another condition for switching from the first control mode to the second control mode. In particular, the switch control between the first control mode and the second control mode according to the present embodiment can be preferably used when starting the wind turbine generator 1.

In one embodiment, as a condition for returning to the first control mode from the second control mode, the motor control part 53 may be configured to return to the first control mode from the second control mode when the pitch angle $\theta$ has exceeded the maximum pitch angle $\theta_{max1}$. Also, the pump control part 52 and the pitch control part 51 may return to the first control mode from the second control mode, when the generator 8 is connected to the utility grid 9 and the pitch angle $\theta$ has exceeded the maximum pitch angle $\theta_{MAX1}$.

Further, although Fig. 4 illustrates a case where the first threshold value of the motor displacement ratio $M_{Fd}$ is equal to the maximum displacement ratio $M_{Fdmax1}$, the first threshold value may be less than the maximum displacement ratio $M_{Fdmax1}$. In one embodiment, the first threshold ratio is set within a range not less than 80% and not greater than 100% of the maximum displacement ratio $M_{Fdmax1}$ of the hydraulic motor 20.

Moreover, in one embodiment, when the motor displacement ratio $M_{Fd}$ has become less than the second threshold value which is lower than the first threshold value, the control of the motor displacement ratio $M_{Fd}$ may be restarted by switching the device for adjusting the pressure $P_a$ of the high-pressure oil from the hydraulic pump 10 to the hydraulic motor 20. In this case, the difference between the first threshold value and the second threshold value may be not less than 2% and not greater than 40% of the rated output of the hydraulic motor 20.

As a result, by setting different switching points for the switch from the control of the hydraulic motor 20 to the control of the hydraulic pump 10 and for the switch from the control of the hydraulic pump 10 to the control of the hydraulic motor 20, it is possible to secure the stability of the control near the switching points.

Hereinafter, the function of each part in the controller 50 according to the first embodiment will be described. The function of the controller 50 may be generally classified into the control of the hydraulic pump 10 and the control of the hydraulic motor 20. Herein, the control for adjusting the displacement of the hydraulic motor 20 will be described in detail at first, and then the control for adjusting the displacement of the hydraulic pump 10 will be described in detail.

(The Control of the Hydraulic Motor)

Fig. 5 is a signal flow chart of determination of the motor displacement ratio $M_{Fd}$ in the motor control part 53 according to the first embodiment.

As shown in the drawing, the motor control part 53 includes a determining device 62 for switching the first control mode for the normal operation and the second control mode for the high-load operation of the motor. The determining device 62 is configured to select a control mode by comparison between the motor displacement ratio $M_{Fd}$ and the first threshold value $M_{Fdmax1}$. Specifically, the determining device 62 selects the first control mode when the motor displacement ratio $M_{Fd}$ is less than the first threshold value $M_{Fdmax1}$ and selects the second control mode when the motor displacement ratio $M_{Fd}$ is not less than the first threshold value $M_{Fdmax1}$.

In the first control mode, the motor control part 53 is configured to calculate the motor displacement ratio $M_{Fd}$ as the control command to be outputted to the hydraulic motor 20 by correcting the reference displacement ratio $M_{Fd0}$ of the hydraulic motor 20 with the correction amount $M_{Fd1}$ which is set based on the pressure $P_a$ of the high-pressure oil.

Hereinafter, the calculation procedures of the control command of the motor displacement ratio $M_{Fd}$ (the first control mode) according to one embodiment will be described specifically.

The reference displacement ratio $M_{Fd0}$ of the hydraulic motor 20 may be set based on the control command of the pump displacement ratio $P_{Fd}$.

For instance, for the hydraulic transmission 6 which includes the hydraulic pump 10 of a piston type shown in Fig. 2 and the hydraulic motor 20 of a piston type shown in Fig. 3, the reference displacement ratio $M_{Fd0}$ of the hydraulic motor 20 can be calculated as described below.

Generally, the output $POWER_P$ of the hydraulic pump 10 is defined by the following equation (1) and the output $POWER_M$ of the hydraulic motor 20 is defined by the following equation (2):

$$Power_P = P_a \times v_P \times n_P \times P_{Fd} \times N_P \qquad (1)$$

$$Power_M = P_a \times v_M \times n_M \times M_{Fd} \times N_M \qquad (2)$$

where $P_a$ is the pressure of the high-pressure oil, $V_P$ is the volume of each cylinder 11 in the hydraulic pump 10, $n_P$ is the total number of the cylinders in the hydraulic pump 10, and $N_P$ is the pump rotation speed (the rotor rotation speed $\omega_R$). Also, $V_M$ is the volume of each cylinder 21 in the hydraulic motor 20, $n_M$ is the total number of the cylinders in the hydraulic motor 20, and $N_M$ is the motor rotation speed. As the pump output $POWER_P$ nearly equals the motor output $POWER_M$, on the assumption that the output $POWER_P$ of the hydraulic pump 10 and the output $POWER_M$ of the hydraulic motor 20 are equal to each other, the following equation (3) can be obtained for calculating the reference displacement ratio $M_{Fd0}$ of the hydraulic motor 20:

$$\begin{aligned} M_{Fd0} &= (v_P \times n_P \times N_M \times P_{Fd}) / (v_M \times n_M \times N_M) \\ &= (D_{Pmax} / D_{Mmax}) \times (N_P / N_M) \times P_{Fd} \qquad (3) \end{aligned}$$

where $D_{Pmax}$ is the total volume of the cylinders in the hydraulic pump 10 (the maximum displacement of the hydraulic pump 10), and $D_{Mmax}$ is the total volume of the cylinders in the hydraulic motor 20 (the maximum displacement of the hydraulic motor 20). Also, $v_P \times n_P = D_{Pmax}$, and $v_M \times n_M = D_{Mmax}$.

The reference displacement ratio $M_{Fdo}$ of the hydraulic motor 20 can be obtained using the above equation (3).

Although the above equation (3) is obtained on the assumption that the output $POWER_P$ of the hydraulic pump 10 and the output $POWER_M$ of the hydraulic motor 20 are equal to each other, the right-side member of the equation (3) may be filtered with a low-pass filter and the n used as the reference displacement ratio $M_{Fd0}$ of the hydraulic motor 20 in order to eliminate the fluctuation components of the pump displacement ratio $P_{Fd}$.

Further, the correction amount $M_{Fd1}$ which is set based on the pressure $P_a$ of the high-pressure oil may be obtained with a pressure feed-back controller 60 which multiplies the variable gain $K_P$ by the deviation between the target pressure Ptgt of the high-pressure oil and the pressure $P_a$ of the high-pressure oil measured with the pressure gauge 42.

Next, the motor displacement ratio $M_{Fd}$ as the control command to be outputted to the hydraulic motor 20 is calculated by subtracting the correction amount $M_{Fd1}$ from the reference displacement ratio $M_{Fd0}$ of the hydraulic motor 20 in the subtractor 61.

In one embodiment, for the motor control part 53 in the second control mode, the motor displacement ratio $M_{Fd}$ as the control command to be outputted to the hydraulic motor 20 is the maximum motor displacement ratio $M_{Fdmax1}$.

As a result, by fixing the motor displacement ratio $M_{Fd}$ at the maximum displacement ratio $M_{Fdmax1}$ when the motor displacement ratio $M_{Fd}$ has become not less than the first threshold value $M_{Fdmax1}$, it is possible to suppress the increase in the pressure $P_a$ of the high-pressure oil as much as possible with the hydraulic motor 20, and to reduce the displacement of the hydraulic pump 10 as well, thus reliably preventing the increase in the pressure $P_a$ of the high-pressure oil.

(The Control of the Hydraulic Pump)

Fig. 6 is a signal flow chart of determination of the pump displacement ratio $P_{Fd}$ in the pump control part 52 according to the first embodiment.

As shown in the drawing, the pump control part 52 includes a determining device 68 for switching the first control mode for the normal operation and the second control mode for the high-load operation of the motor. The determining device 68 is configured to select a control mode by comparison between the motor displacement ratio $M_{Fd}$ and the first threshold value $M_{Fdmax1}$, similarly to the control of the above hydraulic motor 20. Specifically, the determining device 68 selects the first control mode when the motor displacement ratio $M_{Fd}$ is less than the first threshold value $M_{Fdmax1}$ and selects the second control mode when the motor displacement ratio $M_{Fd}$ is not less than the first threshold value $M_{Fdmax1}$.

In the first control mode, the pump control part 52 is configured to calculate the pump displacement ratio $P_{Fd}$ as the control command to be outputted to the hydraulic pump 10 based on the rotation speed $\omega_R$ of the rotor.

Hereinafter, the calculation procedures of the control command of the pump displacement ratio $P_{Fd}$ (the first control mode) according to one embodiment will be described specifically.

For instance, the torque $T_d$ of the hydraulic pump 10 is obtained from the rotor rotation speed $\omega_R$ measured with the rotation speed meter 41, based on the correlation ($\tau$-$\omega$ optimal curve) 6 between the rotor rotation speed $\omega_R$ and the torque $\tau$ of the hydraulic pump 10 as shown in Fig. 7. The $\tau$-$\omega$ optimal curve 65 may be a function which indicates an optimal correlation between the rotor rotation speed $\omega_R$ and the torque $\tau$ of the hydraulic pump 10.

As the torque $T_d$ of the hydraulic pump 10 is a product of the pump displacement $D_P$ and the pressure $P_a$ of the high-pressure oil, the pump displacement $D_P$ can be calculated by dividing the torque $T_d$ obtained from the above correlation by the pressure $P_a$ of the high-pressure oil. Further, by dividing the pump displacement $D_P$ by the maximum displacement $D_{PMAX}$ of the hydraulic pump 10, the pump displacement ratio $P_{Fd}$ as the control command for the hydraulic pump 10 is calculated.

In the second control mode, the pump control part 52 is configured to calculate the pump displacement ratio $P_{Fd}$ as the control command to be outputted to the hydraulic pump 10 by correcting the reference displacement ratio $P_{Fd0}$ of the hydraulic pump 10 with the correction amount $P_{Fd1}$ which is set based on the pressure $P_a$ of the high-pressure oil.

Hereinafter, the calculation procedures of the control command of the pump displacement ratio $P_{Fd}$ (the second control mode) according to one embodiment will be described specifically.

The reference displacement ratio $P_{Fd0}$ of the hydraulic pump 10 may be set based on the control command of the reference pump displacement ratio $P_{Fd0}$ of the hydraulic pump 10.

For instance, for the hydraulic transmission 6 which includes the hydraulic pump 10 of a piston type shown in Fig. 2 and the hydraulic motor 20 of a piston type shown in Fig. 3, the reference displacement ratio $P_{Fd0}$ of the hydraulic pump 10 can be calculated as described below.

On the assumption that the output $POWER_P$ of the hydraulic pump 10 as in the above equation (1) and the output $POWER_M$ of the hydraulic motor 20 as in the above equation (2) are equal to each other, the following equation (4) can be obtained for calculating the reference displacement ratio $P_{Fd0}$ of the hydraulic pump 10:

$$P_{Fd0} = (v_P \times n_P \times N_M \times M_{Fd}) / (v_M \times n_M \times N_M)$$
$$(D_{Mmax} / D_{Pmax}) \times (N_M / N_P) \times M_{Fd} \qquad (4)$$

where $D_{Pmax}$ is the total volume of the cylinders in the hydraulic pump 10 (the maximum displacement of the hydraulic pump 10), and $D_{Mmax}$ is the total volume of the cylinders in the hydraulic motor 20 (the maximum displacement of the hydraulic motor 20). Also, $v_P \times n_P = D_{Pmax}$, and $v_M \times n_M = D_{Mmax}$.

The reference displacement ratio $P_{Fd0}$ of the hydraulic pump 10 can be obtained using the above equation (4).

Although the above equation (4) in the above described example is obtained on the assumption that the output $POWER_P$ of the hydraulic pump 10 and the output $POWER_M$ of the hydraulic motor 20 are equal to each other, the right-side member of the equation (4) may be filtered with a low-pass filter and then used as the reference displacement ratio $P_{Fd0}$ of the hydraulic pump 10 in order to eliminate the fluctuation components of the motor displacement ratio $M_{Fd}$.

Further, the correction amount $P_{Fd1}$ which is set based on the pressure $P_a$ of the high-pressure oil may be obtained with a pressure feed-back controller 66 which multiplies the variable gain $K_P$ by the deviation between the target pressure Ptgt in the high pressure oil line 30 and the pressure $P_a$ of the high-pressure oil measured with the pressure gauge 42.

Next, the pump displacement ratio $P_{Fd}$ as the control command to be outputted to the hydraulic pump 10 is calculated by subtracting the correction amount $P_{Fd1}$ from the reference displacement ratio $P_{Fd0}$ of the hydraulic pump 10 with the subtractor 67.

As a result, by switching to the control of the pressure $P_a$ of the high-pressure oil by controlling the pump displacement ratio $P_{Fd}$ from the adjustment of the pressure $P_a$ of the high-pressure oil by controlling of the displacement of the hydraulic pump 20 when the motor displacement ratio $M_{Fd}$ has become not less than the first threshold value $M_{Fdmax1}$, it is possible to adjust the pressure $P_a$ of the high-pressure oil with high accuracy so as to bring the pressure $P_a$ of the high-pressure oil to the target pressure Ptgt even when excessive energy is inputted into the hydraulic pump 10.

Hereinafter, in reference to Figs. 8 and 9, the change in each parameter of the wind turbine generator 1 will be described by comparison between the control according to the comparative example and the control according to the first embodiment. Fig. 8 is an illustration of an example of the temporal change in the various parameters of the wind turbine generator according to the comparative example. Fig. 9 is an illustration of an example of the temporal change in the various parameters of the wind turbine generator according to the first embodiment. In the example illustrated in Figs. 8 and 9, the wind velocity is not less than the rated wind velocity.

In the control of the comparative example shown in Fig. 8, after connecting the generator 8 to the utility grid 9, the pitch angle $\theta$ is increased to the maximum value by the program control in order to take in wind energy to the maximum extent, and then fixed at the maximum value. Also, the pump displacement ratio $P_{Fd}$ is provided with a control command for controlling the rotation speed $\omega_R$ of the rotor, and thus varied from moment to moment to bring the rotation speed $\omega_R$ of the rotor to the target value. Once the pump displacement ratio $P_{Fd}$ reaches the maximum value, it is fixed at the maximum value. Further, the motor displacement ratio $M_{Fd}$ is provided with a control command for controlling the pressure $P_a$ of the high-pressure oil, and thus varied from moment to moment to bring the pressure $P_a$ of the high-pressure oil to the target value. This motor displacement ratio $M_{Fd}$ is continuously controlled to adjust the pressure $P_a$ of the high-pressure oil even after the pump displacement ratio $P_{Fd}$ has reached the maximum value. However, in the high-load range of the motor displacement ratio $M_{Fd}$, as there remains no enough room for increasing the motor displacement ratio $M_{Fd}$, the pressure $P_a$ of the high-pressure oil continues to change around the tolerant value, raising the possibility of exceeding the tolerant value. In such case, it is necessary to open the relief valve 35 to relieve the high-pressure oil in the high pressure oil line 30 to the low pressure oil line 31, which causes the wind turbine generator 1 to stop the operation.

In contrast, in the control according to the first embodiment as shown in Fig. 9, after connecting the generator 8 to the utility grid 9, in the first control mode where the motor displacement ratio $M_{Fd}$ is less than the first threshold value $M_{Fdmax1}$, the pitch angle $\theta$ is increased to the maximum value by the program control in order to take in the wind energy to the maximum extent, and then fixed at the maximum value. Also, in the first control mode, the pump displacement ratio $P_{Fd}$ is provided with a control command for controlling the rotation speed $\omega_R$ of the rotor, and thus varied from moment to moment to bring the rotation speed $\omega_R$ of the rotor to the target value. Moreover, in the first control mode, the motor displacement ratio $M_{Fd}$ is provided with a control command for controlling the pressure $P_a$ of the high-pressure oil, and thus varied from moment to moment to bring the pressure $P_a$ of the high-pressure oil to the target value. Then, the control mode is switched to the second control mode when the motor displacement ratio $M_{Fd}$ becomes not less than the first threshold value $M_{Fdmax1}$. In the second control mode, the motor displacement ratio $M_{Fd}$ is, as there remains no enough room for increasing the motor displacement ratio $M_{Fd}$, fixed at the maximum displacement ratio $M_{Fdmax1}$ of the hydraulic motor 20. Also, in the second control, the pump displacement ratio $P_{Fd}$ is provided with a control command for controlling the pressure $P_a$ of the high-pressure oil, and thus varied from moment to moment to bring the pressure $P_a$ of the high-pressure oil to the target value. Moreover, the pitch angle $\theta$ is provided with a control command for controlling the rotation speed $\omega_R$ of the rotor , and thus varied from moment to moment to bring the rotation speed $\omega_R$ of the rotor to the target value. As described above, in the high-load range of the motor displacement ratio $M_{Fd}$, as the pressure $P_a$ of the high-pressure oil is adjusted by controlling the pump displacement $P_{Fd}$, it is possible to suppress the pressure $P_a$ of the high-pressure oil to be not greater than the tolerant value and thus to operate the wind turbine generator 1 stably.

(Controller Control according to the Second Embodiment]

Next, the controller control according to the second embodiment will be described.

Fig. 10 is a signal flow chart of determination of the pump displacement ratio in the pump control part 52 according to the second embodiment. Fig. 11 is a signal flow chart of determination of the motor displacement ratio in the motor control part 53 according to the second embodiment. In the second embodiment below, each part of the wind turbine generator 1 will be described using the reference signs shown in Fig. 1.

(Control of the Hydraulic Pump)

As shown in Fig. 10, in the pump control part 52, the pump displacement ratio $P_{Fd}$ as the control command to be outputted to the hydraulic pump 10 is calculated based on the rotor rotation speed $\omega_R$ of the rotor.

Herein, the calculation procedures of the control command of the pump displacement ratio $P_{Fd}$ according to one embodiment will be described specifically.

For instance, the torque $T_d$ is obtained from the rotation speed $\omega_R$ measured with the rotation speed meter 41, based on the correlation 65 between the rotor rotation speed $\omega_R$ and the torque $\tau$ of the hydraulic pump 10 as shown in the above described Fig. 7. As the torque $T_d$ of the hydraulic pump 10 is a product of the pump displacement $D_P$ and the pressure $P_a$ of the high-pressure oil, the pump displacement $D_P$ can be calculated by dividing the torque $T_d$ obtained from the above correlation by the pressure $P_a$ of the high-pressure oil. Further, by dividing the pump displacement $D_P$ by the maximum displacement $D_{Pmax}$ of the hydraulic pump 10, the pump displacement ratio $P_{Fd}$ as the control command for the hydraulic pump 10 is calculated.

This pump displacement ratio $P_{Fd}$ is outputted to the hydraulic pump 12 via the limiter 71. The limiter 71 is configured to, when the pressure $P_a$ of the high-pressure oil is not less than the first threshold value $P_{amax1}$, perform the limiting process on the pump displacement ratio $P_{Fd}$ so as to limit the pump displacement ratio $P_{Fd}$ to be less than the upper limit value. The first threshold value $P_{amax1}$ may be not less than 100% and not greater than 120% of the rated pressure of the pressure $P_a$ of the high-pressure oil.

Fig. 12 is an illustration of the upper limit value of the pump displacement ratio $P_{Fd}$ used in the limiting process. As shown in the drawing, the upper limit value of the pump displacement ratio $P_{Fd}$ used for the limiting process is defined by the correlation in which the upper limit value of the pump displacement ratio $P_{Fd}$ decreases responsive to the increase in the pressure $P_a$ of the high-pressure oil and finally reaches zero in the pressure range where the high pressure oil is not less than the first threshold value $P_{amax1}$.

As described above, as the limiting process is performed on the pump displacement ratio $P_{Fd}$ which is defined based on the correlation between the rotor rotation speed $\omega_R$ and the torque $T_d$ of the hydraulic pump 10 when the pressure $P_a$ of the high-pressure oil is not less than the first threshold value $P_{amax1}$, the pump displacement ratio $P_{Fd}$ is limited to be not greater than the upper limit value. In this case, as the upper limit value of the pump displacement ratio $P_{Fd}$ limited by the limiting process is defined by the correlation in which the upper limit value of the pump displacement ratio $P_{Fd}$ decreases responsive to the increase in the pressure $P_a$ of the high-pressure oil and finally reaches zero, it is possible to set an appropriate upper limit value of the pump displacement ratio $P_{Fd}$ corresponding to the increase of the pressure $P_a$ of the high-pressure oil. As a result, it is possible to prevent the sudden increase of the pressure $P_a$ of the high-pressure oil even when excessive energy is inputted to the hydraulic pump 10.

(Control of the Hydraulic Motor)

As shown in Fig. 11, in the motor control part 53, the motor displacement ratio $M_{Fd}$ as the control command to be outputted to the hydraulic motor 20 is calculated by correcting the reference displacement ratio $M_{Fd0}$ of the hydraulic motor 20 with the correction amount $M_{Fd1}$ which is set based on the pressure $P_a$ of the high-pressure oil.

Herein, the calculation procedures of the control command of the motor displacement ratio $M_{Fd}$ according to one embodiment will be described specifically.

The reference displacement ratio $M_{Fd0}$ of the hydraulic motor 20 may be set based on the control command of the pump displacement ratio $P_{Fd}$.

For instance, for the hydraulic transmission 6 which includes the hydraulic pump 10 of a piston type shown in Fig. 2 and the hydraulic motor 20 of a piston type shown in Fig. 3, the reference displacement ratio $M_{Fd0}$ of the hydraulic motor 20 can be calculated as described below.

On the assumption that the output $POWER_P$ of the hydraulic pump 10 as in the above equation (1) and the output $POWER_M$ of the hydraulic motor 20 as in the above equation (2) are equal to each other, the above equation (3) can be obtained for calculating the reference displacement ratio $M_{Fd0}$ of the hydraulic motor 20 from which the reference displacement ratio $M_{Fd0}$ of the hydraulic motor 20 can be obtained.

Further, the correction amount $M_{Fd1}$ which is set based on the pressure $P_a$ of the high-pressure oil may be obtained by a pressure feed-back controller 75 which multiplies the variable gain $K_P$ by the deviation between the target pressure Ptgt in the high pressure oil line 30 and $P_a$ measured with the pressure gauge 42.

Next, in the subtractor 77, the motor displacement ratio $M_{Fd}$ as the control command to be outputted to the hydraulic motor 20 is calculated by subtracting the correction amount $M_{Fd1}$ from the reference displacement ratio $M_{Fd0}$ of the hydraulic motor 20.

In one embodiment, the pressure feedback controller 75 may be configured to determine the reference displacement ratio $M_{Fd0}$ of the hydraulic motor 20 using the variable gain $K_P$ which varies corresponding to the pressure $P_a$ of the high-pressure oil.

As shown in the drawing, the variable gain $K_P$ is configured to, when the pressure $P_a$ of the high-pressure oil has become not less than the first threshold value $P_{amax}$, limit the pump displacement ratio $P_{Fd}$ to be not greater than the upper limit value with responsive to the increase in the pressure $P_a$ of the high-pressure oil, and to determine the control command of the motor displacement ratio $M_{Fd}$ using a larger gain than the gain used when the pressure $P_a$ of the high-pressure oil is less than the first threshold value $P_{amax}$.

As a result, when the pressure $P_a$ of the pressurized oil has become not less than the first threshold value, the sensitivity for the pressure deviation of the displacement of the hydraulic motor 20 (the deviation between the target pressure value Ptgt and the pressure $P_a$ of the pressurized oil in the high pressure oil line) is improved by using a larger gain than the gain used when the pressure $_{Pa}$ of the high-pressure oil is less than the first threshold value. Thus, it is possible to quickly return the pressure $P_a$ of the high-pressure oil to less than the first threshold value $P_{amax}$.

Fig. 13 is an illustration of a specific example of the correlation of the variable gain $K_P$.

In one embodiment, the variable gain $K_P$ is set to the maximum gain $K_{max}$ when the pressure $P_a$ of the high-pressure oil is not greater than the minimum value $P_{amin}$ in the tolerant range or not less than the maximum value (the first threshold value) Pamax in the tolerant range. In contrast, when the pressure $P_a$ of the high-pressure oil is greater than the minimum value $P_{amin}$ in the tolerant range and less than the maximum value $P_{amax}$ in the tolerant range, the variable gain $K_P$ is set to increase toward the maximum gain $K_{max}$ as the variable gain $K_P$ approaches closer to the minimum value $P_{amin}$ in the tolerant range or the maximum value $P_{amax}$ in the tolerant range. As a result, when the pressure $P_a$ of the high-pressure oil is nearly out of the tolerant range, or when the pressure $P_a$ of the high-pressure oil has come out of the tolerant range, it is possible to quickly bring the pressure $P_a$ of the high-pressure oil in the tolerant range and closer to the target pressure value Ptgt by increasing the variable gain $K_P$, which is to be multiplied by the deviation between the pressure $P_a$ of the high-pressure oil and the target pressure value Ptgt (or by setting the variable gain $K_P$ at the maximum value $K_{max}$).

As described above, according to the above embodiments, when the displacement $M_{Fd}$ of the hydraulic motor 20 is less than the first threshold value $M_{Fdmax1}$, it is possible to appropriately control the pressure $P_a$ of the high-pressure oil by controlling the displacement of the hydraulic motor 20.

On the other hand, when the displacement $M_{Fd}$ of the hydraulic motor 20 has reached not less than the first threshold value $M_{Fdmax1}$, the energy inputted into the hydraulic pump 10 is suppressed by reducing the displacement $P_{Fd}$ of the hydraulic pump 10, so as to prevent the sudden increase of the pressure $P_a$ of the high-pressure oil. As a result, it is possible to maintain the pressure $P_a$ of the high-pressure oil in the appropriate range even when there are fluctuation factors of the energy inputted into the hydraulic pump 10.

Embodiments of the present invention were described in detail above, but the present invention is not limited thereto, and various amendments and modifications may be implemented within a scope of the present invention.

For instance, although the hydraulic transmission is used for a power generating apparatus of a renewable energy type in the above embodiments, the use of the hydraulic transmission is not limited to this. The hydraulic transmission can be used for other apparatuses such as the machine for controlling ocean current power generation or controlling ship propellers, the earth-moving machine, and the constructing machine. Herein, a power generating apparatus of a renewable energy type is a power generating apparatus that utilizes a renewable energy such as wind, tidal current, ocean current, and the river current. For example, a wind turbine generator, a tidal current generator, an ocean current generator, a river current generator and the like can be named.

REFERENCE SIGNS LIST

| | |
|---|---|
| 1 | Wind turbine generator |
| 2 | Blade |
| 3 | Hub |
| 4 | Rotor |
| 5 | Rotation shaft |
| 6 | Hydraulic transmission |
| 7 | Output shaft |
| 8 | Generator |
| 9 | Utility grid |
| 10 | Hydraulic pump |
| 11, 21 | Cylinder |
| 12, 22 | Piston |

| | |
|---|---|
| 13, 23 | Working chamber |
| 14, 24 | Cam |
| 15, 25 | High pressure valve |
| 16, 26 | Low pressure valve |
| 17, 27 | High pressure communication path |
| 18, 28 | Low pressure communication path |
| 20 | Hydraulic motor |
| 30 | High pressure oil line |
| 31 | Low pressure oil line |
| 32, 33 | Accumulator |
| 34 | Bypass flow path |
| 35 | Relief valve |
| 41, 43 | Rotation speed meter |
| 42 | Pressure gauge |
| 50 | Controller |
| 51 | Pitch control part |
| 52 | Pump control part |
| 53 | Motor control part |
| 54 | Memory part |
| 61, 66 74 | Feedback controller |
| 61, 67, 77 | Subtractor |
| 62, 68 | Determining device |
| 65 | τ-ω curve |
| 71 | Filter |

**Claims**

**1.** A hydraulic transmission (6) comprising:

a hydraulic pump (10) of a variable displacement type configured to be driven by a mechanical energy inputted into a rotation shaft (5);
a hydraulic motor (20) of a variable displacement type configured to be driven by a pressurized oil from the hydraulic pump (10);
a high pressure oil line (30) for introducing the pressurized oil from the hydraulic pump (10) to the hydraulic motor (20); and
a controller (50) for controlling a displacement of each of the hydraulic pump (10) and the hydraulic motor (20), wherein the controller (50) is configured to:

when at least one of the displacement of the hydraulic motor (20) or a pressure of the pressurized oil is less than a first threshold value, control the displacement of the hydraulic motor (20) so as to adjust the pressure of the pressurized oil in the high pressure oil line (30) to a target pressure value; and
when at least one of the displacement of the hydraulic motor (20) or the pressure of the pressurized oil is not less than the first threshold value, reduce the displacement of the hydraulic pump (10) so as to prevent the pressure of the pressurized oil from increasing suddenly responsive to a rapid increase of the mechanical energy inputted into the rotation shaft (5),

**characterized in that** the controller (50) is configured to perform at least one of the following control modes 1) or 2) :

1) a first control mode in which, when the displacement of the hydraulic motor (20) is not less than the first threshold value, the controller (50) controls the displacement of the hydraulic pump (10) by switching a device for adjusting the pressure of the pressurized oil to the target value from the hydraulic motor (20) to the hydraulic pump (10);
2) a second control mode in which, when the pressure of the pressurized oil is not less than the first threshold value, the controller (50) limits the displacement of the hydraulic pump (10) to be not greater than an upper limit value by performing a limiting process on the displacement of the hydraulic pump (10) which is determined based on a correlation between a rotation speed of the rotation shaft (5) and a torque of the hydraulic pump (10), the upper limit value limited by the limiting process being determined by a correlation in which the upper limit value decreases and finally reaches zero with an increase of the pressure of the pressurized oil in a pressure range where the pressure of the pressurized oil is not less than the first threshold value.

**2.** The hydraulic transmission (6) according to claim 1,
wherein the controller (50) is configured to, when the displacement of the hydraulic motor (20) is not less than the first threshold value, fix the displacement of the hydraulic motor (20) at a maximum value.

**3.** The hydraulic transmission (6) according to claim 1 or 2,
wherein, the controller (50) is configured to, when the displacement of the hydraulic motor (20) becomes less than a second threshold value which is smaller than the first threshold value, restart controlling the displacement of the hydraulic motor (20) by switching the device for adjusting the pressure of the pressurized oil to the target value from the hydraulic pump (10) to the hydraulic motor (20).

**4.** The hydraulic transmission (6) according to any of claims 1 to 3,
wherein the controller is configured to:

determine a control command for the displacement of the hydraulic motor (20) using a gain which varies depending on the pressure of the pressurized oil; and
when the pressure of the pressurized oil is not less than the first threshold value, limit the displacement of the hydraulic pump (10) to be not greater than the upper limit value responsive to an increase of the pressure of the pressurized oil, and determine the control command for the displacement of the hydraulic motor (20) using a greater gain than the gain used when the pressure of the hydraulic pump (10) is less than the first threshold value.

**5.** The hydraulic transmission (6) according to any of claims 1 to 4,
wherein the controller (50) is configured to, when the displacement of the hydraulic motor (20) is less than the first threshold value, control the displacement of the hydraulic pump (10) so as to adjust the torque of the hydraulic pump (10) to a torque pressure value in accordance with a correlation between the rotation speed of the rotation shaft (5) and the torque of the hydraulic pump (10).

**6.** The hydraulic transmission (6) according to any of claims 1 to 5,
wherein the first threshold value is not less than 80% and not greater than 100% of a maximum displacement of the hydraulic motor (20).

**7.** The hydraulic transmission (6) according to any of claims 1 to 5,
wherein the first threshold value is not less than 100% and not greater than 120% of a rated pressure of the pressurized oil.

**8.** The hydraulic transmission (6) according to any of claims 1 to 5,
wherein a difference between the first threshold value and the second threshold value is not less than 2% and not greater than 40% of the maximum displacement of the hydraulic motor.

**9.** A power generating apparatus of a renewable energy type comprising:

at least one blade (2);
a generator (8),
a rotation shaft (5) configured to be rotated by a renewable energy received by the at least one blade (2); and
the hydraulic transmission according to any one of claims 1 to 8, configured to transmit rotation energy of the rotation shaft (5) to the generator (8).

**10.** The power generating apparatus of a renewable energy type according to claim 9,
wherein the controller (50) is configured to, when the displacement of the hydraulic motor (20) is not less than the first threshold value, fix the displacement of the hydraulic motor (20) at a maximum value.

**11.** The power generating apparatus of a renewable energy type according to claim 10,
wherein the power generating apparatus of a renewable energy type is a wind turbine generator (1) which generates electrical power in the generator, utilizing wind energy received by the at least one blade (2) as a renewable energy.

**12.** An operation method for a hydraulic transmission (6) which includes: a hydraulic pump (10) of a variable displacement type configured to be driven by a mechanical energy inputted into a rotation shaft (5); a hydraulic motor (20) of a variable displacement type configured to be driven by a pressurized oil from the hydraulic pump (10); and a high pressure oil line (30) for introducing the pressurized oil from the hydraulic pump (10) to the hydraulic motor (20),
wherein, when at least one of a displacement of the hydraulic motor (20) and a pressure of the pressurized oil (30) is less than a first threshold value, the displacement of the hydraulic motor (20) is controlled so as to adjust the pressure of the pressurized oil in the high pressure oil line (30) to a target value, and
wherein, when at least one of the displacement of the hydraulic motor (20) and the pressure of the pressurized oil is not less than the first threshold value, the displacement of the hydraulic pump (10) is reduced so as to prevent the pressure of the pressurized oil from increasing suddenly associated with rapid increase of the mechanical energy inputted into the rotation shaft (5),
**characterized in that**, when reducing the displacement of the hydraulic pump (10), at least one of the following steps 1) or 2) is performed:

1) a first step of, when the displacement of the hydraulic motor (20) is not less than the first threshold value, controlling the displacement of the hydraulic pump (10) by switching a device for adjusting the pressure of the pressurized oil to the target value from the hydraulic motor (20) to the hydraulic pump (10);
2) a second step of, when the pressure of the pressurized oil is not less than the first threshold value, limiting the displacement of the hydraulic pump (10) to be not greater than an upper limit value by performing a limiting process on the displacement of the hydraulic pump (10) which is determined based on a correlation between a rotation speed of the rotation shaft (5) and a torque of the hydraulic pump (10), the upper limit value limited by the limiting process being determined by a correlation in which the upper limit value decreases and finally reaches zero with an increase of the pressure of the pressurized oil in a pressure range where the pressure of the pressurized oil is not less than the first threshold value.

**13.** An operation method for a power generating apparatus of a renewable energy type which includes: at least one blade (2); a rotation shaft (5) configured to be rotated by a renewable energy received by the at least one blade (2); a hydraulic pump (10) of a variable displacement type configured to be driven by the rotation shaft (5); a hydraulic motor (20) of a variable displacement type configured to be driven by a pressurized oil from the hydraulic pump (10); a high pressure oil line (30) for introducing the pressurized oil from the hydraulic pump (10) to the hydraulic motor (20); and a generator (8) configured to be driven by the hydraulic motor (20), **characterized in that** the operation method comprises a step of operating a hydraulic transmission in accordance with the operation method as claimed in claim 12.

## Patentansprüche

**1.** Hydraulisches Getriebe (6), umfassend:

eine Hydraulikpumpe (10) vom variablen Verstelltyp, die dafür konfiguriert ist, durch eine mechanische Energie, die an eine Drehwelle (5) angelegt wird, angetrieben zu werden,
einen Hydraulikmotor (20) vom variablen Verstelltyp, der dafür konfiguriert ist, durch ein druckbeaufschlagtes Öl von der Hydraulikpumpe (10) angetrieben zu werden,
eine Hochdruckölleitung (30) zum Einleiten des druckbeaufschlagten Öls von der Hydraulikpumpe (10) in den Hydraulikmotor (20) und
eine Steuereinheit (50) zum Steuern einer Fördermenge sowohl der Hydraulikpumpe (10) als auch des Hydraulikmotors (20),
wobei die Steuereinheit (50) dafür konfiguriert ist:

wenn die Fördermenge des Hydraulikmotors (20) und/oder ein Druck des druckbeaufschlagten Öls geringer sind als ein erster Schwellenwert, die Fördermenge des Hydraulikmotors (20) so zu steuern, dass der Druck des druckbeaufschlagten Öls in der Hochdruckölleitung (30) auf einen Solldruckwert justiert wird, und
wenn die Fördermenge des Hydraulikmotors (20) und/oder der Druck des druckbeaufschlagten Öls nicht geringer sind als der erste Schwellenwert, die Fördermenge der Hydraulikpumpe (10) zu verringern, so dass verhindert wird, dass der Druck des druckbeaufschlagten Öls in Reaktion auf ein rasches Ansteigen der an die Drehwelle (5) angelegten mechanischen Energie schlagartig ansteigt,

**dadurch gekennzeichnet, dass** die Steuereinheit (50) dafür konfiguriert ist, mindestens einen der folgenden Steuerungsmodi 1) oder 2) auszuführen:

1) einen ersten Steuerungsmodus, in dem, wenn die Fördermenge des Hydraulikmotors (20) nicht geringer ist als der erste Schwellenwert, die Steuereinheit (50) die Fördermenge der Hydraulikpumpe (10) durch Umschalten einer Vorrichtung zum Justieren des Drucks des druckbeaufschlagten Öls auf den Sollwert von dem Hydraulikmotor (20) zu der Hydraulikpumpe (10) steuert,
2) einen zweiten Steuerungsmodus, in dem, wenn der Druck des druckbeaufschlagten Öls nicht geringer ist als der erste Schwellenwert, die Steuereinheit (50) die Fördermenge der Hydraulikpumpe (10) auf einen Wert begrenzt, der nicht größer ist als ein Obergrenzenwert, indem ein Begrenzungsprozess an der Fördermenge der Hydraulikpumpe (10) ausgeführt wird, der auf der Basis einer Korrelation zwischen einer Drehzahl der Drehwelle (5) und einem Drehmoment der Hydraulikpumpe (10) bestimmt wird, wobei der durch den Begrenzungsprozess begrenzte Obergrenzenwert durch eine Korrelation bestimmt wird, bei der der Obergrenzenwert abnimmt und schließlich null erreicht, während der Druck des druckbeaufschlagten Öls in einem Druckbereich zunimmt, wo der Druck des druckbeaufschlagten Öls nicht geringer ist als der erste Schwellenwert.

**2.** Hydraulisches Getriebe (6) nach Anspruch 1,
wobei die Steuereinheit (50) dafür konfiguriert ist, wenn die Fördermenge des Hydraulikmotors (20) nicht geringer ist als der erste Schwellenwert, die Fördermenge des Hydraulikmotors (20) auf einen maximalen Wert zu fixieren.

**3.** Hydraulisches Getriebe (6) nach Anspruch 1 oder 2,
wobei die Steuereinheit (50) dafür konfiguriert ist, wenn die Fördermenge des Hydraulikmotors (20) geringer wird als ein zweiter Schwellenwert, der kleiner ist als der erste Schwellenwert, die Steuerung der Fördermenge des Hydraulikmotors (20) neu zu beginnen, indem die Vorrichtung zum Justieren des Drucks des druckbeaufschlagten Öls auf den Sollwert der Hydraulikpumpe (10) zu dem Hydraulikmotor (20) umgeschaltet wird.

**4.** Hydraulisches Getriebe (6) nach einem der Ansprüche 1 bis 3,
wobei die Steuereinheit dafür konfiguriert ist:

einen Steuerungsbefehl für die Fördermenge des Hydraulikmotors (20) unter Verwendung einer Verstärkung zu bestimmen, die in Abhängigkeit vom Druck des druckbeaufschlagten Öls variiert, und
wenn der Druck des druckbeaufschlagten Öls nicht geringer ist als der erste Schwellenwert, die Fördermenge der Hydraulikpumpe (10) auf einen Wert zu begrenzen, der nicht größer ist als der Obergrenzenwert, wenn der Druck des druckbeaufschlagten Öls zunimmt, und den Steuerungsbefehl für die Fördermenge des Hydraulikmotors (20) unter Verwendung einer größeren Verstärkung zu bestimmen als der Verstärkung, die verwendet wird, wenn der Druck der Hydraulikpumpe (10) geringer ist als der erste Schwellenwert.

**5.** Hydraulisches Getriebe (6) nach einem der Ansprüche 1 bis 4,
wobei die Steuereinheit (50) dafür konfiguriert ist, wenn die Fördermenge des Hydraulikmotors (20) geringer ist als der erste Schwellenwert, die Fördermenge der Hydraulikpumpe (10) so zu steuern, dass das Drehmoment der Hydraulikpumpe (10) auf einen Drehmoment-Druck-Wert gemäß einer Korrelation zwischen der Drehzahl der Drehwelle (5) und dem Drehmoment der Hydraulikpumpe (10) justiert wird.

**6.** Hydraulisches Getriebe (6) nach einem der Ansprüche 1 bis 5,
wobei der erste Schwellenwert nicht geringer als 80 % und nicht größer als 100 % einer maximalen Fördermenge des Hydraulikmotors (20) ist.

**7.** Hydraulisches Getriebe (6) nach einem der Ansprüche 1 bis 5,
wobei der erste Schwellenwert nicht geringer als 100 % und nicht größer als 120 % eines Nenndrucks des druckbeaufschlagten Öls ist.

**8.** Hydraulisches Getriebe (6) nach einem der Ansprüche 1 bis 5,
wobei eine Differenz zwischen dem ersten Schwellenwert und dem zweiten Schwellenwert nicht geringer als 2 % und nicht größer als 40 % der maximalen Fördermenge des Hydraulikmotors ist.

**9.** Stromerzeugungsvorrichtung vom Typ für erneuerbare Energien, umfassend:

mindestens einen Flügel (2),

einen Generator (8),
eine Drehwelle (5), die dafür konfiguriert ist, durch eine erneuerbare Energie, die durch den mindestens einen Flügel (2) empfangen wird, in Drehbewegung versetzt zu werden, und
das hydraulische Getriebe nach einem der Ansprüche 1 bis 8, das dafür konfiguriert ist, Rotationsenergie von der Drehwelle (5) zu dem Generator (8) zu übertragen.

**10.** Stromerzeugungsvorrichtung vom Typ für erneuerbare Energien nach Anspruch 9,
wobei die Steuereinheit (50) dafür konfiguriert ist, wenn die Fördermenge des Hydraulikmotors (20) nicht geringer ist als der erste Schwellenwert, die Fördermenge des Hydraulikmotors (20) auf einen maximalen Wert zu fixieren.

**11.** Stromerzeugungsvorrichtung vom Typ für erneuerbare Energien nach Anspruch 10,
wobei die Stromerzeugungsvorrichtung vom Typ für erneuerbare Energien ein Windgenerator (1) ist, der mittels Windenergie, die durch den mindestens einen Flügel (2) als eine erneuerbare Energie empfangen wird, elektrischen Strom in dem Generator erzeugt.

**12.** Betriebsverfahren für ein hydraulisches Getriebe (6), das enthält:

eine Hydraulikpumpe (10) vom variablen Verstelltyp, die dafür konfiguriert ist, durch eine mechanische Energie, die an eine Drehwelle (5) angelegt wird, angetrieben zu werden, einen Hydraulikmotor (20) vom variablen Verstelltyp, der dafür konfiguriert ist, durch ein druckbeaufschlagtes Öl von der Hydraulikpumpe (10) angetrieben zu werden, und eine Hochdruckölleitung (30) zum Einleiten des druckbeaufschlagten Öls von der Hydraulikpumpe (10) in den Hydraulikmotor (20),
wobei, wenn eine Fördermenge des Hydraulikmotors (20) und/oder ein Druck des druckbeaufschlagten Öls (30) geringer sind als ein erster Schwellenwert, die Fördermenge des Hydraulikmotors (20) so gesteuert wird, dass der Druck des druckbeaufschlagten Öls in der Hochdruckölleitung (30) auf einen Solldruckwert justiert wird, und
wobei, wenn die Fördermenge des Hydraulikmotors (20) und/oder der Druck des druckbeaufschlagten Öls nicht geringer sind als der erste Schwellenwert, die Fördermenge der Hydraulikpumpe (10) verringern wird, so dass verhindert wird, dass der Druck des druckbeaufschlagten Öls im Fall eines raschen Ansteigens der an die Drehwelle (5) angelegten mechanischen Energie schlagartig ansteigt,
**dadurch gekennzeichnet, dass** beim Verringern der Fördermenge der Hydraulikpumpe (10) mindestens einer der folgenden Schritte 1) oder 2) ausgeführt wird:

1) einen ersten Schritt, in dem, wenn die Fördermenge des Hydraulikmotors (20) nicht geringer ist als der erste Schwellenwert, die Fördermenge der Hydraulikpumpe (10) durch Umschalten einer Vorrichtung zum Justieren des Drucks des druckbeaufschlagten Öls auf den Sollwert von dem Hydraulikmotor (20) zu der Hydraulikpumpe (10) gesteuert wird,
2) einen zweiten Schritt, in dem, wenn der Druck des druckbeaufschlagten Öls nicht geringer ist als der erste Schwellenwert, die Fördermenge der Hydraulikpumpe (10) auf einen Wert begrenzt wird, der nicht größer ist als ein Obergrenzenwert, indem ein Begrenzungsprozess an der Fördermenge der Hydraulikpumpe (10) ausgeführt wird, der auf der Basis einer Korrelation zwischen einer Drehzahl der Drehwelle (5) und einem Drehmoment der Hydraulikpumpe (10) bestimmt wird, wobei der durch den Begrenzungsprozess begrenzte Obergrenzenwert durch eine Korrelation bestimmt wird, bei der der Obergrenzenwert abnimmt und schließlich null erreicht, während der Druck des druckbeaufschlagten Öls in einem Druckbereich zunimmt, wo der Druck des druckbeaufschlagten Öls nicht geringer ist als der erste Schwellenwert.

**13.** Betriebsverfahren für eine Stromerzeugungsvorrichtung vom Typ für erneuerbare Energien, die enthält:

mindestens einen Flügel (2), eine Drehwelle (5), die dafür konfiguriert ist, durch eine erneuerbare Energie, die durch den mindestens einen Flügel (2) empfangen wird, in Drehbewegung versetzt zu werden, eine Hydraulikpumpe (10) vom variablen Verstelltyp, die dafür konfiguriert ist, durch die Drehwelle (5) angetrieben zu werden, einen Hydraulikmotor (20) vom variablen Verstelltyp, der dafür konfiguriert ist, durch ein druckbeaufschlagtes Öl von der Hydraulikpumpe (10) angetrieben zu werden, eine Hochdruckölleitung (30) zum Einleiten des druckbeaufschlagten Öls von der Hydraulikpumpe (10) in den Hydraulikmotor (20), und einen Generator (8), der dafür konfiguriert ist, durch den Hydraulikmotor (20) angetrieben zu werden,
**dadurch gekennzeichnet, dass** das Betriebsverfahren einen Schritt des Betreibens eines hydraulischen Getriebes gemäß dem Betriebsverfahren nach Anspruch 12 umfasst.

## Revendications

**1.** Transmission hydraulique (6) comprenant :

une pompe hydraulique (10) de type à cylindrée variable configurée pour être entraînée par une énergie mécanique entrée dans un arbre de rotation (5) ;
un moteur hydraulique (20) de type à cylindrée variable configuré pour être entraîné par une huile sous pression provenant de la pompe hydraulique (10) ;
une conduite d'huile à haute pression (30) pour introduire l'huile sous pression de la pompe hydraulique (10) dans le moteur hydraulique (20) ; et
un organe de commande (50) pour contrôler une cylindrée de chacun parmi la pompe hydraulique (10) et le moteur hydraulique (20),
dans laquelle l'organe de commande (50) est configuré pour :

lorsqu'au moins l'une parmi la cylindrée du moteur hydraulique (20) ou une pression de l'huile sous pression est inférieure à une première valeur de seuil, contrôler la cylindrée du moteur hydraulique (20) afin d'ajuster la pression de l'huile sous pression dans la conduite d'huile à haute pression (30) par rapport à une valeur de pression cible ; et
lorsqu'au moins l'une parmi la cylindrée du moteur hydraulique (20) ou la pression de l'huile sous pression n'est pas inférieure à la première valeur de seuil, réduire la cylindrée de la pompe hydraulique (10) pour empêcher la pression de l'huile sous pression d'augmenter brusquement en réponse à une augmentation rapide de l'énergie mécanique entrée dans l'arbre de rotation (5),

**caractérisée en ce que** l'organe de commande (50) est configuré pour réaliser au moins l'un des modes de commande 1) ou 2) suivants :

1) un premier mode de commande dans lequel, lorsque la cylindrée du moteur hydraulique (20) n'est pas inférieure à la première valeur de seuil, l'organe de commande (50) contrôle la cylindrée de la pompe hydraulique (10) en commutant un dispositif pour ajuster la pression de l'huile sous pression par rapport à la valeur cible, du moteur hydraulique (20) à la pompe hydraulique (10) ;
2) un second mode de commande dans lequel, lorsque la pression de l'huile sous pression n'est pas inférieure à la première valeur de seuil, l'organe de commande (50) limite la cylindrée de la pompe hydraulique (100) pour qu'elle ne soit pas supérieure à une valeur de limite supérieure en réalisant un processus de limitation sur la cylindrée de la pompe hydraulique (10) qui est déterminé en fonction d'une corrélation entre une vitesse de rotation de l'arbre de rotation (5) et un couple de la pompe hydraulique (10), la valeur de limite supérieure limitée par le processus de limitation étant déterminée par une corrélation dans laquelle la valeur de limite supérieure diminue et atteint finalement zéro avec une augmentation de la pression de l'huile sous pression dans une plage de pression dans laquelle la pression de l'huile sous pression n'est pas inférieure à la première valeur de seuil.

**2.** Transmission hydraulique (6) selon la revendication 1,
dans laquelle l'organe de commande (50) est configuré pour, lorsque la cylindrée du moteur hydraulique (20) n'est pas inférieure à la première valeur de seuil, fixer la cylindrée du moteur hydraulique (20) à une valeur maximum.

**3.** Transmission hydraulique (6) selon la revendication 1 ou 2,
dans laquelle l'organe de commande (50) est configuré pour, lorsque la cylindrée du moteur hydraulique (20) devient inférieure à une seconde valeur de seuil qui est inférieure à la première valeur de seuil, redémarrer le contrôle de la cylindrée du moteur hydraulique (20) en commutant le dispositif pour ajuster la pression de l'huile sous pression par rapport à la valeur cible, de la pompe hydraulique (10) au moteur hydraulique (20).

**4.** Transmission hydraulique (6) selon l'une quelconque des revendications 1 à 3,
dans laquelle l'organe de commande est configuré pour :

déterminer une commande de contrôle pour la cylindrée du moteur hydraulique (20) en utilisant un gain qui varie en fonction de la pression de l'huile sous pression ; et
lorsque la pression de l'huile sous pression n'est pas inférieure à la première valeur de seuil, limiter la cylindrée de la pompe hydraulique (10) pour qu'elle ne soit pas supérieure à la valeur de limite supérieure en réponse à une augmentation de la pression de l'huile sous pression, et déterminer la commande de contrôle pour le déplacement du moteur hydraulique (20) en utilisant un gain supérieur au gain utilisé lorsque la pression de la pompe hydraulique (10) est inférieure à la première valeur de seuil.

5. Transmission hydraulique (6) selon l'une quelconque des revendications 1 à 4,
dans laquelle l'organe de commande (50) est configuré pour, lorsque la cylindrée du moteur hydraulique (20) est inférieure à la première valeur de seuil, contrôler la cylindrée de la pompe hydraulique (10) afin d'ajuster le couple de la pompe hydraulique (10) par rapport à une valeur de pression de couple selon une corrélation entre la vitesse de rotation de l'arbre de rotation (5) et le couple de la pompe hydraulique (10).

6. Transmission hydraulique (6) selon l'une quelconque des revendications 1 à 5,
dans laquelle la première valeur de seuil n'est pas inférieure à 80% et non supérieure à 100% d'une cylindrée maximum du moteur hydraulique (20).

7. Transmission hydraulique (6) selon l'une quelconque des revendications 1 à 5,
dans laquelle la première valeur de seuil n'est pas inférieure à 100% et non supérieure à 120% d'une pression nominale de l'huile sous pression.

8. Transmission hydraulique (6) selon l'une quelconque des revendications 1 à 5,
dans laquelle une différence entre la première valeur de seuil et la seconde valeur de seuil n'est pas inférieure à 2% et non supérieure à 40% de la cylindrée maximum du moteur hydraulique.

9. Appareil de génération de puissance de type à énergie renouvelable comprenant :

au moins une aube (2) ;
un générateur (8),
un arbre de rotation (5) configuré pour être entraîné en rotation par une énergie renouvelable reçue par la au moins une aube (2) ; et
la transmission hydraulique selon l'une quelconque des revendications 1 à 8, configurée pour transmettre l'énergie de rotation de l'arbre de rotation (5) au générateur (8).

10. Appareil de génération de puissance de type à énergie renouvelable selon la revendication 9,
dans lequel l'organe de commande (50) est configuré pour, lorsque la cylindrée du moteur hydraulique (20) n'est pas inférieure à la première valeur de seuil, fixer la cylindrée du moteur hydraulique (20) à une valeur maximum.

11. Appareil de génération de puissance de type à énergie renouvelable selon la revendication 10,
dans lequel l'appareil de génération de puissance du type à énergie renouvelable est un générateur d'éolienne (1) qui génère du courant électrique dans le générateur, en utilisant l'énergie du vent reçue par la au moins une aube (2) en tant qu'énergie renouvelable.

12. Procédé de fonctionnement pour une transmission hydraulique (6) qui comprend : une pompe hydraulique (10) de type à cylindrée variable configurée pour être entraînée par une énergie mécanique entrée dans un arbre de rotation (5) ; un moteur hydraulique (20) de type à cylindrée variable configuré pour être entraîné par une huile sous pression provenant de la pompe hydraulique (10) ; et une conduite d'huile à haute pression (30) pour introduire l'huile sous pression de la pompe hydraulique (10) dans le moteur hydraulique (20),
dans lequel, lorsque au moins l'une parmi une cylindrée du moteur hydraulique (20) et une pression de l'huile sous pression (30) est inférieure à une première valeur de seuil, la cylindrée du moteur hydraulique (20) est contrôlée afin d'ajuster la pression de l'huile sous pression dans la conduite d'huile à haute pression (30) par rapport à une valeur cible, et
dans lequel, lorsque au moins l'une parmi la cylindrée du moteur hydraulique (20) et la pression de l'huile sous pression n'est pas inférieure à la première valeur de seuil, la cylindrée de la pompe hydraulique (10) est réduite afin d'empêcher la brusque augmentation de la pression de l'huile sous pression associée à l'augmentation rapide de l'énergie mécanique entrée dans l'arbre de rotation (5),
**caractérisé en ce que** lors de la réduction de la cylindrée de la pompe hydraulique (10), au moins l'une des étapes 1) ou 2) suivantes est réalisée :

1) une première étape de, lorsque la cylindrée du moteur hydraulique (20) n'est pas inférieure à la première valeur de seuil, contrôle de la cylindrée de la pompe hydraulique (10) en commutant un dispositif pour ajuster la pression de l'huile sous pression par rapport à la valeur cible, du moteur hydraulique (20) à la pompe hydraulique (10) ;
2) une seconde étape de, lorsque la pression de l'huile sous pression n'est pas inférieure à la première valeur de seuil, limitation de la cylindrée de la pompe hydraulique (10) pour qu'elle ne soit pas supérieure à une valeur de limite supérieure en réalisant un processus de limitation sur la cylindrée de la pompe hydraulique (10) qui est déterminé en fonction d'une corrélation entre une vitesse de rotation de l'arbre de rotation (5) et un couple de la pompe hydraulique (10), la valeur de limite supérieure limitée par le processus de limitation étant déterminée par une corrélation dans laquelle la valeur de limite supérieure diminue et finalement atteint zéro avec une augmentation de la pression de l'huile sous pression dans une plage de pression dans laquelle la pression de l'huile sous pression n'est pas inférieure à la première valeur de seuil.

**13.** Procédé de fonctionnement pour un appareil de génération de puissance du type à énergie renouvelable qui comprend : au moins une aube (2) ; un arbre de rotation (5) configuré pour être entraîné en rotation par une énergie renouvelable reçue par la au moins une aube (2) ; une pompe hydraulique (10) de type à cylindrée variable configurée pour être entraînée par l'arbre de rotation (5) ; un moteur hydraulique (20) de type à cylindrée variable configuré pour être entraîné par une huile sous pression provenant de la pompe hydraulique (10) ; une conduite d'huile à haute pression (30) pour introduire l'huile sous pression de la pompe hydraulique (10) dans le moteur hydraulique (20) ; et un générateur (8) configuré pour être entraîné par le moteur hydraulique (20),
**caractérisé en ce que** le procédé de fonctionnement comprend une étape d'actionnement d'une transmission hydraulique selon le procédé de fonctionnement selon la revendication 12.

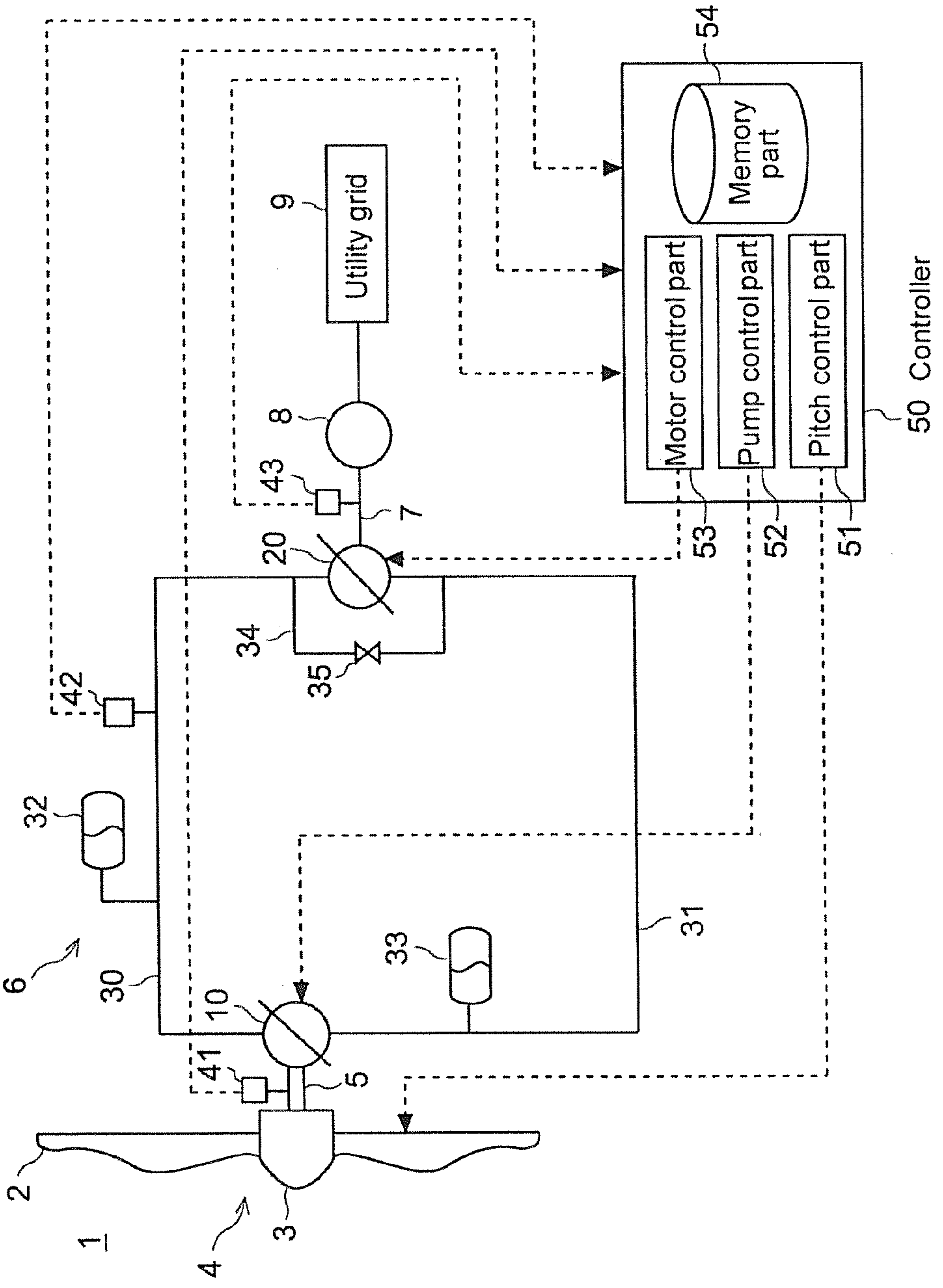
Memory part
Motor control part
Pump control part
Pitch control part
Controller
Utility grid
1
2
3
4
5
6
7
8
9
10
20
30
31
32
33
34
35
41
42
43
50
51
52
53
54

FIG. 1

FIG. 2

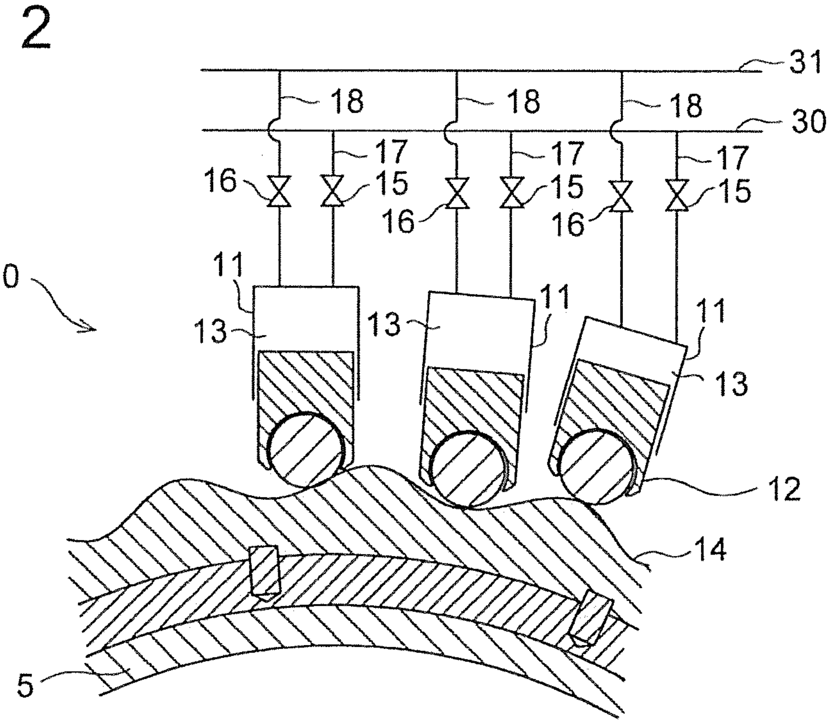
31
18
18
18
30
17
17
17
16
15
15
15
16
16
10
11
11
11
13
13
13
12
14
5

FIG. 3

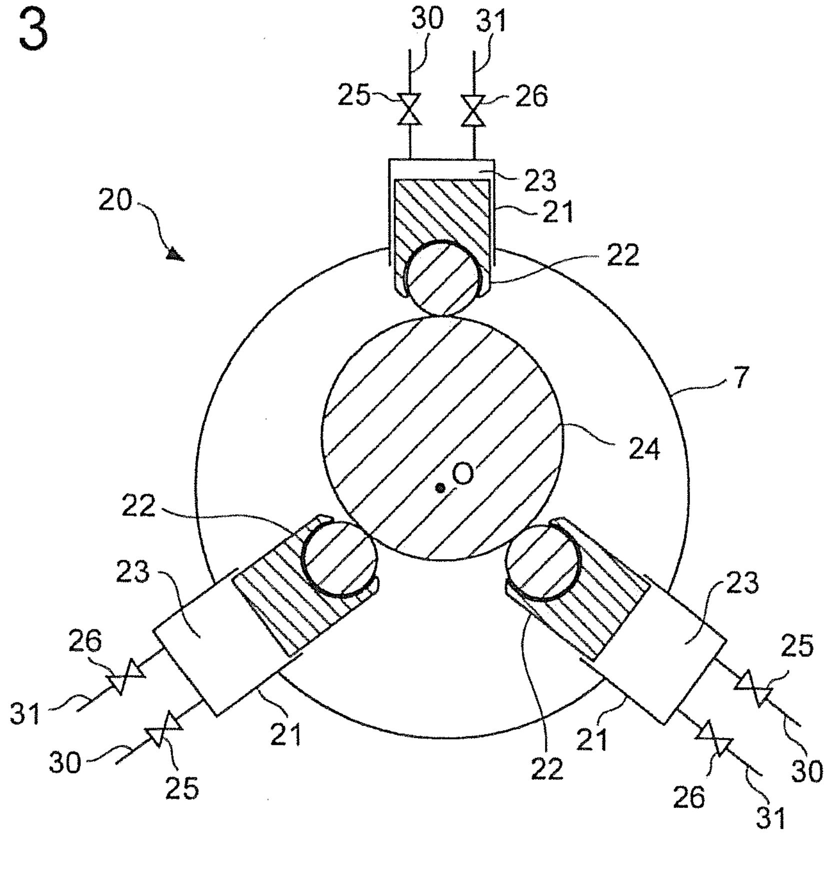
30
31
25
26
23
21
20
22
7
24
O
22
23
23
26
25
31
21
21
22
30
30
25
26
31

FIG. 4

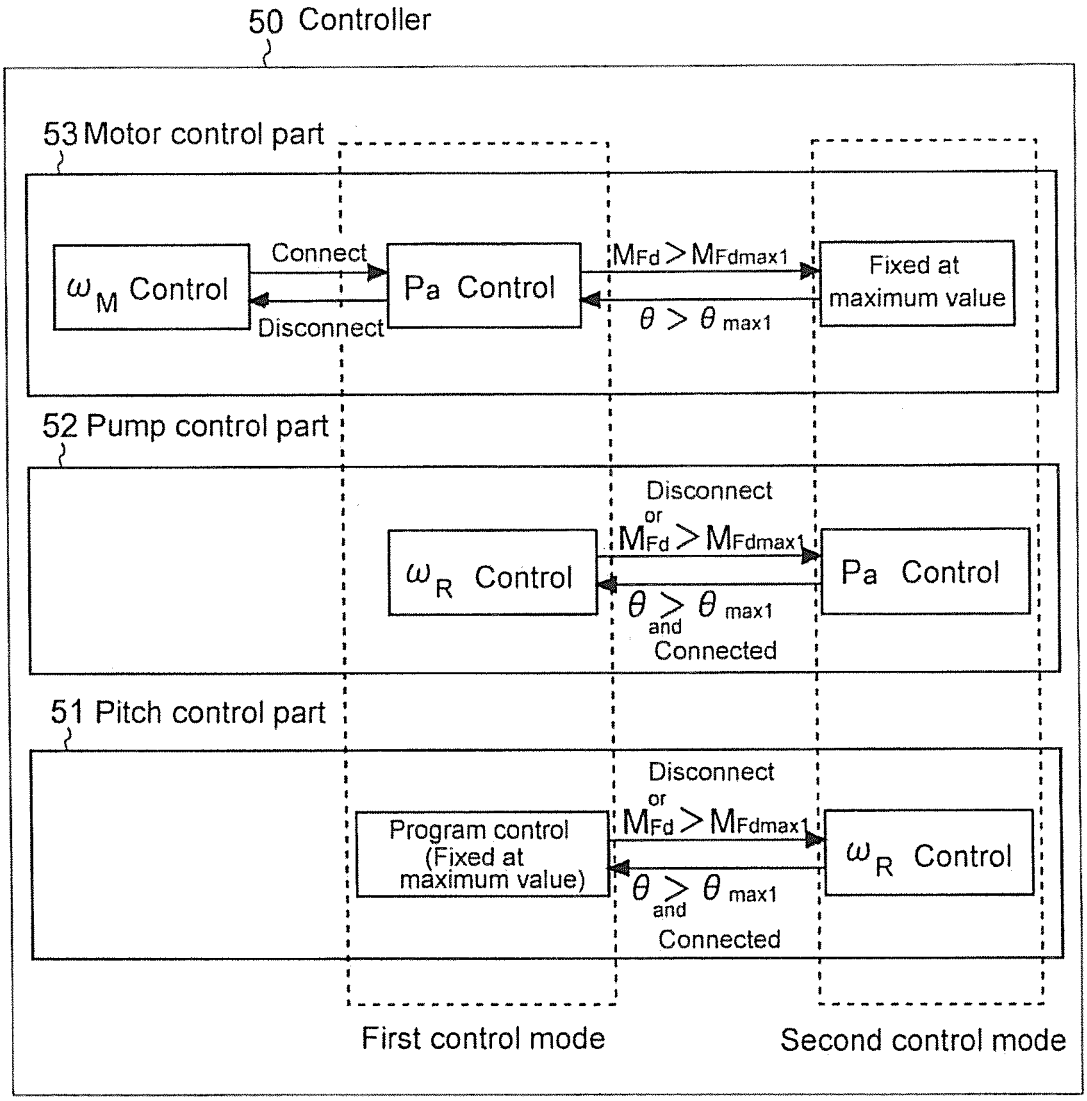
50 Controller
53 Motor control part
ωM Control
Connect
Disconnect
Pa Control
MFd > MFdmax1
θ > θ max1
Fixed at maximum value
52 Pump control part
ωR Control
Disconnect or MFd > MFdmax1
θ > θ max1 and Connected
Pa Control
51 Pitch control part
Program control (Fixed at maximum value)
Disconnect or MFd > MFdmax1
θ > θ max1 and Connected
ωR Control
First control mode
Second control mode

FIG. 5

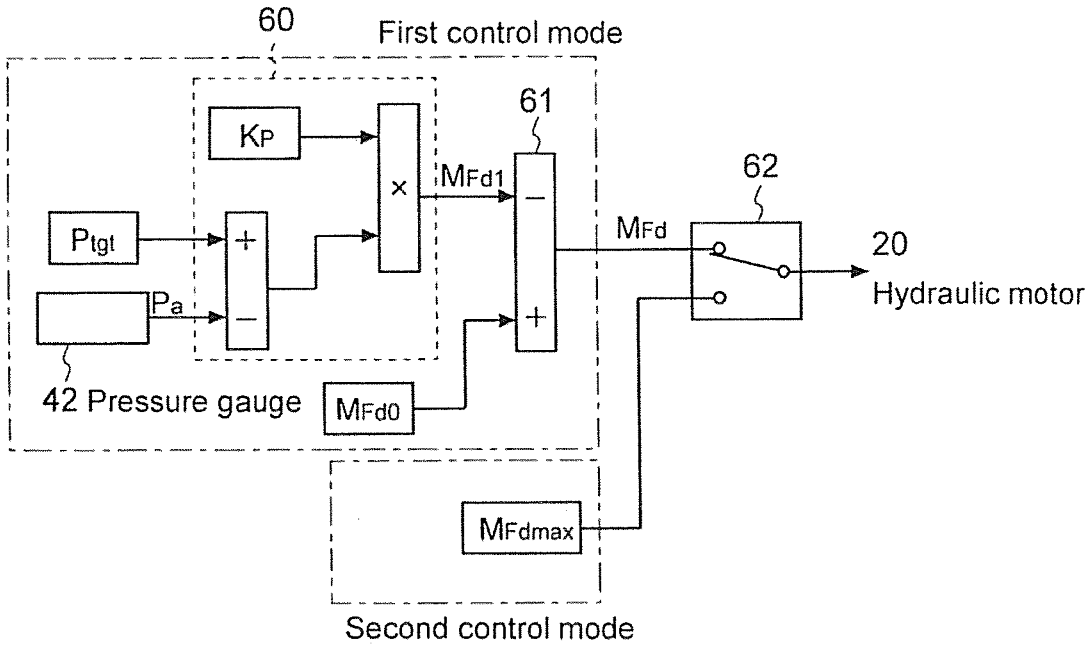
60
First control mode
61
KP
×
MFd1
−
MFd
62
Ptgt
+
20
Hydraulic motor
Pa
−
+
42 Pressure gauge
MFd0
MFdmax
Second control mode

FIG. 6

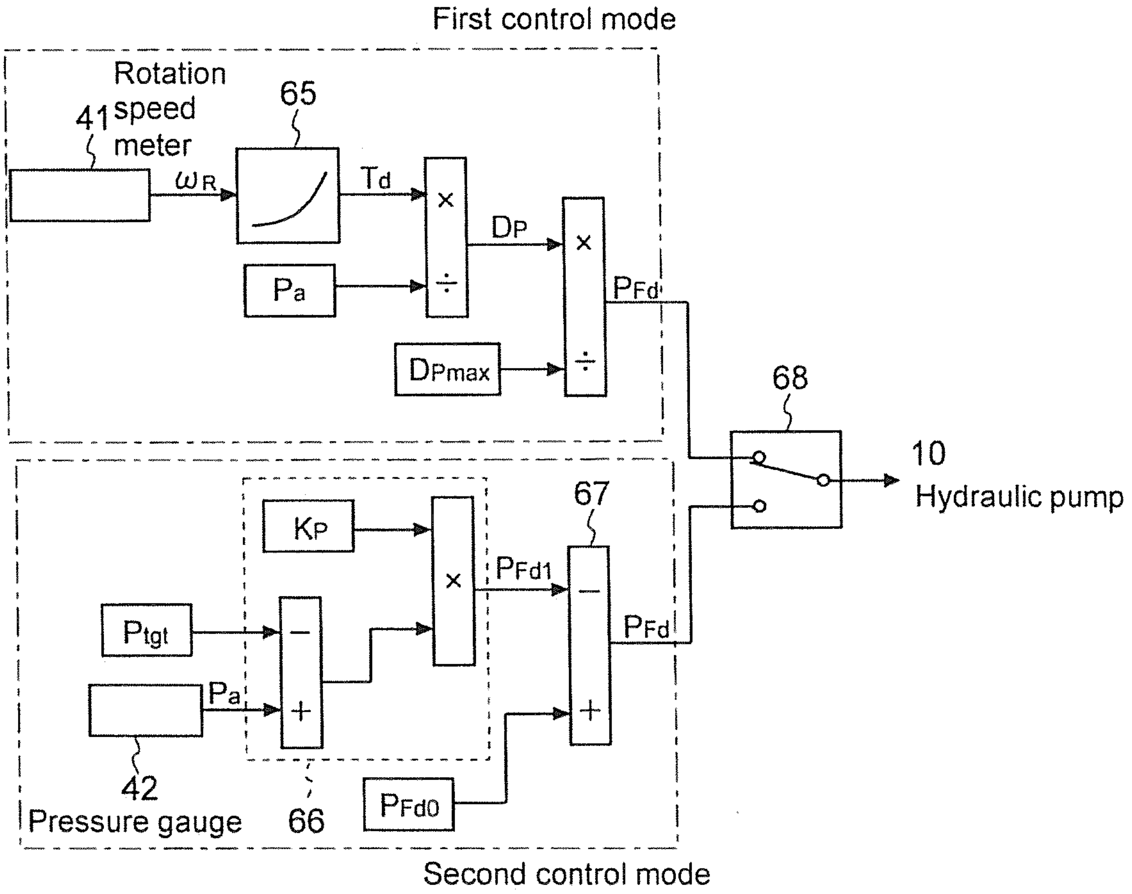
First control mode
Rotation speed meter
41
65
ωR
Td
×
DP
×
Pa
÷
PFd
DPmax
÷
68
10
Hydraulic pump
KP
67
×
PFd1
−
Ptgt
−
PFd
Pa
+
+
42
Pressure gauge
66
PFd0
Second control mode

FIG. 7

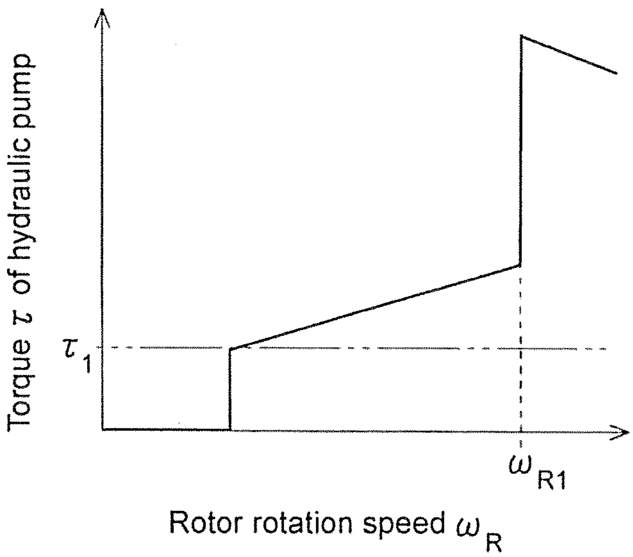

FIG. 8

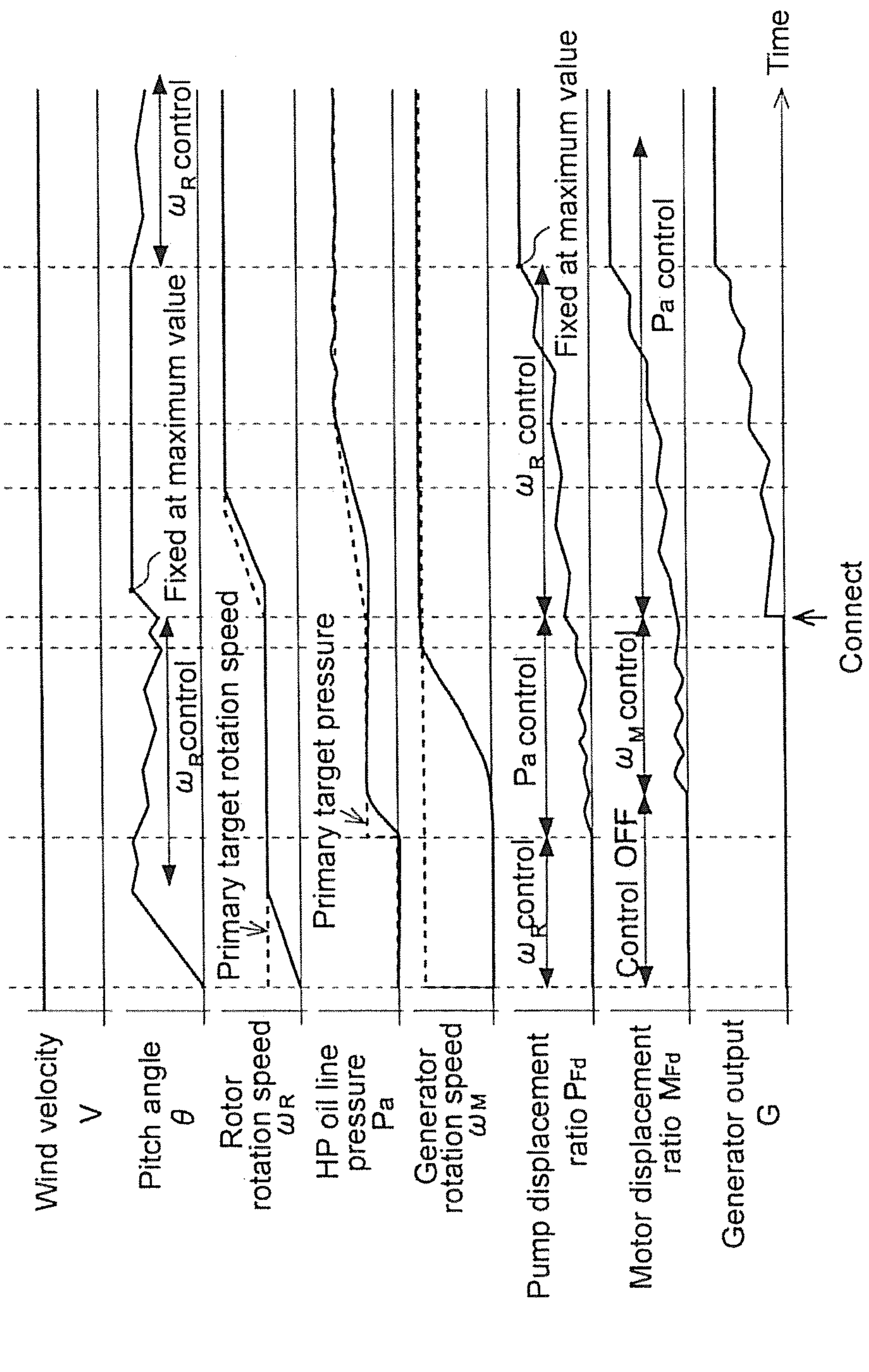

Wind velocity V
Pitch angle θ
Rotor rotation speed ωR
HP oil line pressure Pa
Generator rotation speed ωM
Pump displacement ratio PFd
Motor displacement ratio MFd
Generator output G
ωR control
Fixed at maximum value
Primary target rotation speed
Primary target pressure
ωR control
Pa control
Control OFF
ωM control
Pa control
Connect
Time

FIG. 9

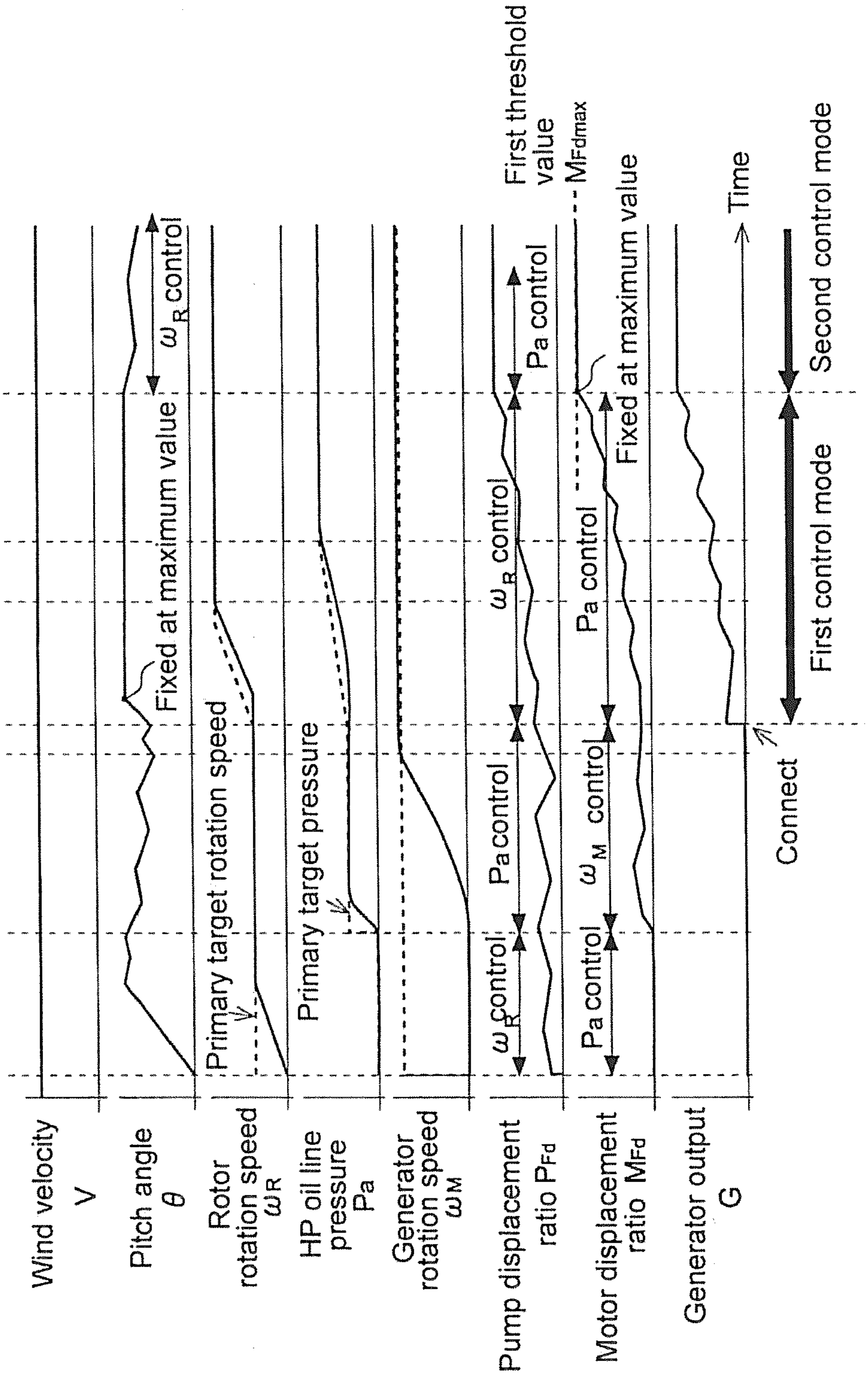

Wind velocity V
Pitch angle θ
Rotor rotation speed ωR
HP oil line pressure Pa
Generator rotation speed ωM
Pump displacement ratio PFd
Motor displacement ratio MFd
Generator output G
Fixed at maximum value
ωR control
Primary target rotation speed
Primary target pressure
ωR control
Pa control
ωR control
Pa control
First threshold value
MFdmax
Pa control
Pa control
ωM control
Pa control
Fixed at maximum value
Time
Connect
First control mode
Second control mode

FIG. 10

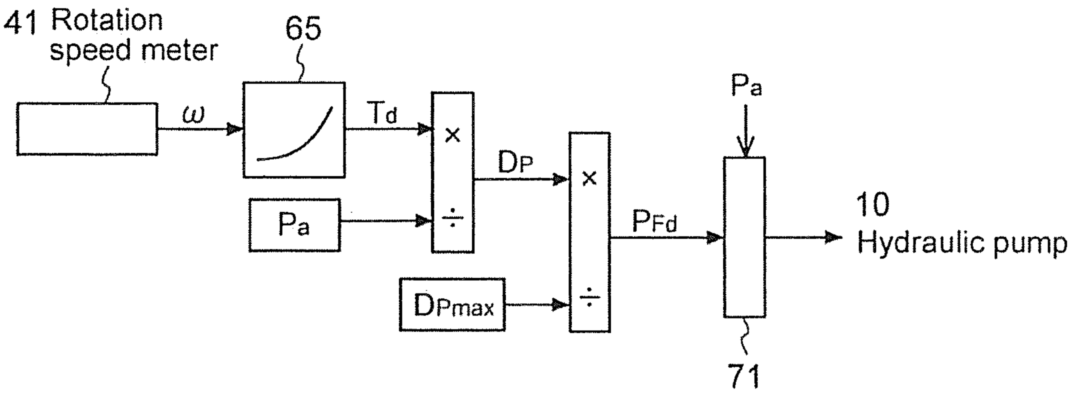
41 Rotation speed meter
65
ω
Td
×
÷
Pa
DP
×
÷
DPmax
PFd
Pa
10
Hydraulic pump
71

FIG. 11

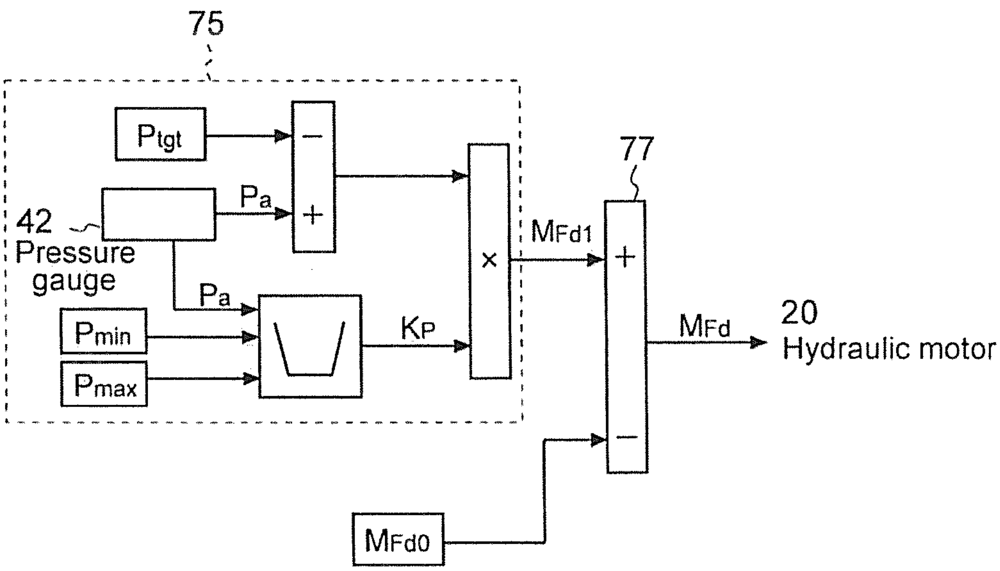
75
Ptgt
−
+
Pa
42
Pressure gauge
Pa
Pmin
Pmax
KP
×
MFd1
77
+
−
MFd
20
Hydraulic motor
MFd0

FIG. 12

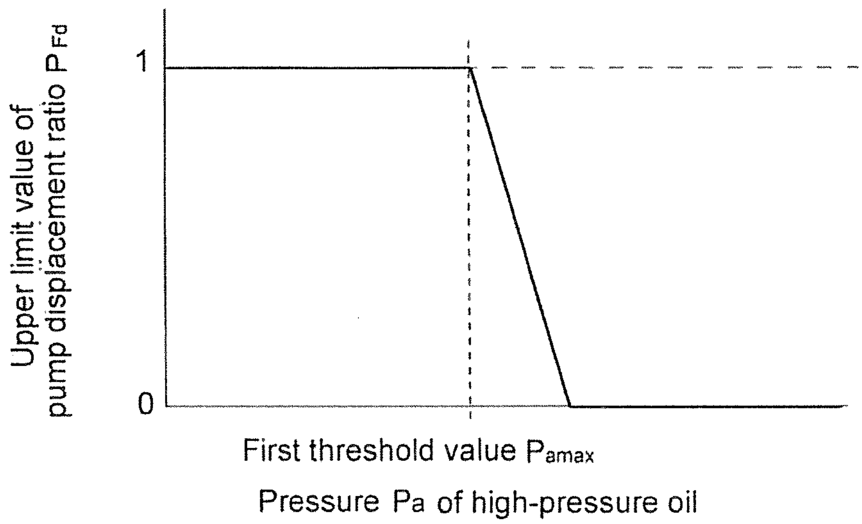
Upper limit value of pump displacement ratio P Fd
1
0
First threshold value Pamax
Pressure Pa of high-pressure oil

FIG. 13

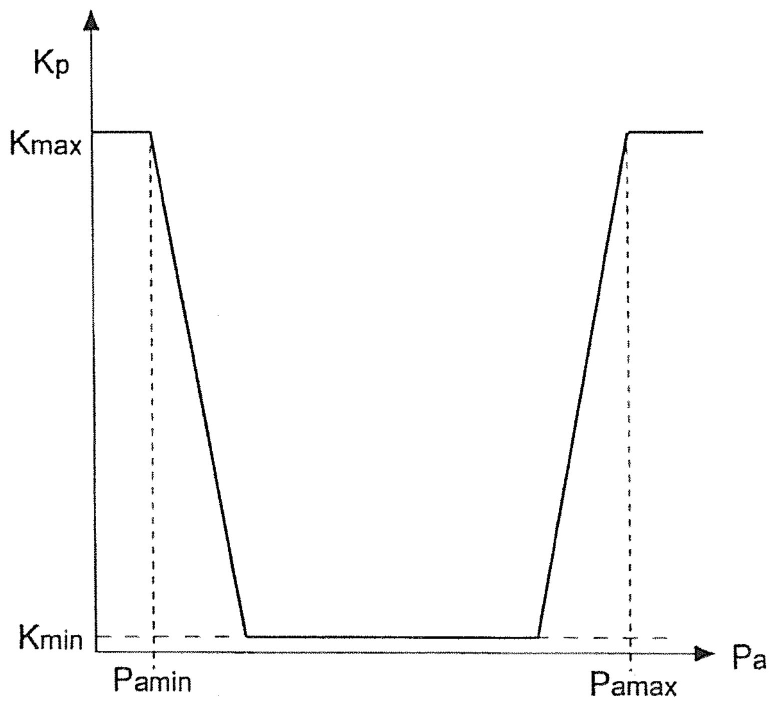
Kp
Kmax
Kmin
Pamin
Pamax
Pa

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012073504 A
- WO 2011147997 A2